# NEUE EUROPÄISCHE PATENTSCHRIFT

(11) **EP 3 026 134 B2**
(45) Veröffentlichungstag und Bekanntmachung des Hinweises auf die Entscheidung über den Einspruch: **12.01.2022**
(45) Hinweis auf die Patenterteilung: 02.05.2018
(21) Anmeldenummer: 15158514.8
(22) Anmeldetag: 10.03.2015
(51) Int. Cl.: C22F 1/04, B22D 7/00, B23K 35/00, B23K 35/28, C22C 21/00, C22F 1/043, F28D 1/053, F28F 1/02, F28F 1/12, F28F 21/08, C22C 21/02

(54) **WÄRMETAUSCHER, VERWENDUNG EINER ALUMINIUMLEGIERUNG UND EINES ALUMINIUMBANDS SOWIE VERFAHREN ZUR HERSTELLUNG EINES ALUMINIUMBANDS**
HEAT EXCHANGER, USE OF AN ALUMINIUM ALLOY AND AN ALUMINIUM TAPE AND METHOD FOR PRODUCING AN ALUMINIUM TAPE
ÉCHANGEUR THERMIQUE, UTILISATION D'UN ALLIAGE D'ALUMINIUM ET D'UNE BANDE D'ALUMINIUM ET PROCÉDÉ DE PRODUCTION D'UNE BANDE D'ALUMINIUM

(30) Priorität: 27.11.2014 DE 102014117384
(43) Veröffentlichungstag der Anmeldung: 01.06.2016
(73) Patentinhaber: Speira GmbH, 41515 Grevenbroich (DE)
(72) Erfinder: Bermig, Gerhard, 21640 Horneburg (DE); Janssen, Hartmut, 40724 Hilden (DE); Saß, Volker, 53721 Siegburg (DE); Schlüter, Stefan, 40591 Düsseldorf (DE)
(74) Vertreter: Cohausz & Florack

(56) Entgegenhaltungen:
- EP-A1- 1 247 873
- EP-A1- 2 039 790
- EP-A1- 2 090 425
- EP-A1- 2 770 071
- US-A- 5 028 276
- US-A1- 2007 286 763
- Registration Record Series Teal Sheets by the Aluminum Association, April 2006 (2006-04), pages 4-5,
- European Aluminium Association: "Applications - Power train - Heat exchangers", The Aluminium Automotive Manual, 2011,
- GERHARD BERMIG et al.: "Copper-free Header & Folded Tube Materials", DVS 8th Brazing Seminar, June 2014 (2014-06), pages 1-12, Dusseldorf
- "Heat Exchanger Aluminum", Aleris, 2014, pages 1-12,
- Public prior sale by Aleris Rolled Products Germany GmbH to Nissens A/S of coils of the alloy 3103 in May 2013
- JOHN E. HATCH: In: "Basic textbook Aluminum: Properties and Physical Metallurgy", January 1993 (1993-01) vol. 301, pages 372-373,
- "Precision Drawn Aluminium Tubes and Multi Port Extru- sions", Heat Transfer Tonder. Undated, but in the possession of the oppo- nent prior to 2013,
- Stefan Schluter et al.: "Material Packages For Brazed Aluminium Solutions In HVAC&R", Hydro Aluminium, 25 March 2010 (2010-03-25), pages 1-38,
- Z.J. LOK: "Microchemistry in aluminium sheet production", PhD thesis, April 2005 (2005-04), pages 1-3,

## Beschreibung

Die Erfindung betrifft einen Wärmetauscher, insbesondere für Kraftfahrzeuge, mit mindestens einem Tauscherröhrchen aus einer Aluminiumlegierung und mit mindestens einer in Fluidverbindung an dem Tauscherröhrchen angeschlossenen Komponente, wobei das Tauscherröhrchen und die Komponente über eine gemeinsame Lötverbindung miteinander verbunden sind. Weiterhin betrifft die Erfindung die Verwendung einer Aluminiumlegierung oder eines Aluminiumbands mit einer Kernlage aus dieser Aluminiumlegierung zur Herstellung eines Sammlerrohrs oder eines Rohrbodens für einen gelöteten Wärmetauscher sowie ein Verfahren zur Herstellung eines walzplattierten Aluminiumbands, insbesondere für die zuvor genannte Verwendung.

Ein Wärmetauscher dient dazu, thermische Energie von einem Medienstrom auf einen anderen Medienstrom zu übertragen. Zu diesem Zweck weist der Wärmetauscher mindestens ein Tauscherröhrchen auf, das dazu eingerichtet ist, im Betrieb von einem ersten Medienstrom durchströmt zu werden, wobei dieser über das Tauscherröhrchen in thermischem Kontakt mit einem zweiten Medienstrom steht. Hierzu kann das Tauscherröhrchen insbesondere im Betrieb von dem zweiten Medienstrom umströmt werden. Für eine bessere Wärmeübetragung wird ein Wärmetauscher typischerweise so konstruiert, dass eine große für den Wärmeaustausch nutzbare Oberfläche zur Verfügung steht. Zu diesem Zweck können beispielsweise ein gewundenes Tauscherröhrchen, ein Tauscherröhrchen mit einer Vielzahl von Kanälen und/oder ein Tauscherröhrchenbündel mit einer Vielzahl von Tauscherröhrchen eingesetzt werden. Zusätzlich oder alternativ können Kühlkörper wie Lamellen an das Tauscherröhrchen gelötet werden, um die thermische Kontaktfläche weiter zu vergrößern.

Neben dem mindestens einen Tauscherröhrchen weisen Wärmetauscher weitere Komponenten auf, aus denen im Betrieb ein Medienstrom in das Tauscherröhrchen hinein bzw. in die ein Medienstrom aus dem Tauscherröhrchen fließt. Komponenten, die an ein Ende des Tauscherröhrchens angeschlossen werden, um den Medienstrom in das Tauscherröhrchen einzuleiten bzw. den aus dem Tauscherröhrchen austretenden Medienstrom aufzufangen, werden auch als Sammlerrohr oder Rohrboden bezeichnet. Unter einem Sammlerrohr wird insbesondere ein in Umfangsrichtung geschlossener Körper, typischerweise in Form eines Rohres, verstanden, der Durchbrechungen zum Anschluss von Tauscherröhrchen eines Wärmetauschers aufweist. Unter einem Rohrboden wird insbesondere ein in Umfangsrichtung nicht vollständig geschlossener Körper, beispielsweise mit einem halben Rohrquerschnitt, verstanden, der durch ein weiteres Bauteil, beispielsweise durch eine Kunststoffplatte, zu einem in Umfangsrichtung geschlossenen Körper ergänzt wird. Der Rohrboden weist ebenfalls Durchbrechungen zum Anschluss von Tauscherröhrchen eines Wärmetauschers auf.

In gelöteten Wärmetauschern aus Aluminium stellt die Korrosion durch Umwelteinflüsse ein erhebliches Problem dar, insbesondere für Anwendungen im Automobilbereich.

Da für die einzelnen Bestandteile eines Wärmetauschers wie Lamellen, Tauscherröhrchen, Sammlerrohre etc. typischerweise für den jeweiligen Anwendungszweck optimierte Aluminiumlegierungen mit unterschiedlicher chemischer Zusammensetzung und dementsprechend unterschiedlichem Korrosionspotential zur Anwendung kommen, liegt in dem Wärmetauscher ein gekoppeltes galvanisches Korrosionssystem vor.

Diesem Umstand wird üblicherweise bei der Werkstoffauswahl Rechnung getragen, indem für besonders kritische Komponenten, wie zum Beispiel für dünnwandige, medienführende Rohre, Aluminiumwerkstoffe mit einem vergleichsweise edlem Korrosionspotential eingesetzt werden, während für die Funktion des Wärmetauschers weniger kritische Komponenten, wie zum Beispiel Lamellen, aus Aluminiumwerkstoffen mit unedlerem Korrosionspotential gefertigt werden. Dadurch werden im Einsatz zuerst die weniger kritischen Bestandteile des Wärmetauschers korrosiv angegriffen, wodurch die Lebensdauer des Wärmetauschers, d.h. die Zeit bis zum Auftreten einer Leckage, wesentlich verlängert werden kann.

Die Europäische Patentanmeldung EP 2 090 425 A1 betrifft einen Verbundwerkstoff aufweisend ein Trägermaterial, wobei das Trägermaterial mit einer Korrosionsschutzschicht aus einer Aluminiumlegierung beschichtet ist. Der Verbundwerkstoff wird für die Herstellung von Wärmetauschern verwendet.

Für Kondensatoren von Klimaanlagen haben sich für die Kühlmedium führenden Rohre im Kühlernetz weitgehend stranggepresste Mehrkammerröhrchen, sogenannte MPEs, durchgesetzt. Um im Fertigungsprozess der MPEs die Presskräfte beim Strangpressen zu begrenzen, enthalten typische Aluminiumlegierungen für MPEs typischerweise deutlich weniger Legierungselemente (wie z.B. Mn, Si oder Cu) als die für die übrigen Wärmetauscherkomponenten üblichen Walzlegierungen, die typischerweise auf Al-Mn-Legierungen (Legierungen vom Typ EN-AW 3xxx) basieren.

Dies gilt insbesondere für diejenigen Komponenten wie Sammlerrohre oder Rohrböden, mit denen die MPEs im Wärmetauscher verlötet werden. Dadurch liegt in vielen Fällen das Korrosionspotential des MPEs negativer als das des Sammlerrohres oder Rohrbodens, wodurch das MPE im Bereich zwischen der Lötverbindung zum Sammlerrohr und den ersten Luftlamellen bevorzugt korrodiert.

Zur Vermeidung dieser lokalen Korrosion der MPEs sind verschiedene Gegenmaßnahmen bekannt, die teilweise auch miteinander kombiniert werden:

So ist bekannt, eine zinkhaltige Beschichtung auf das MPE aufzubringen, zum Beispiel durch thermisches Spritzen oder durch Aufbringen einer zinkhaltigen Flussmittelbeschichtung. Das Aufbringen von Zink auf die Oberfläche der MPEs reduziert lokal das Korrosionspotential des Aluminiumwerkstoffs, so dass sich ein Korrosionsangriff bevorzugt lateral parallel zur Rohroberfläche ausbildet. Ein lokaler Korrosionsangriff, ein sogenanntes Pitting, kann auf diese Weise unterbunden werden, so dass sich die Lebensdauer des Wärmetauschers deutlich erhöht.

Weiterhin ist es bekannt, ein zinkhaltiges Lot auf dem Sammlerrohr oder dem Rohrboden zu verwenden. Auf diese Weise wird das Korrosionspotential auf der Oberfläche des Sammlerrohrs bzw. des Rohrbodens stark erniedrigt, so dass es nach dem Löten idealerweise unter dem Korrosionspotential des MPEs liegt, welches dann durch das Sammlerrohr oder den Rohrboden anodisch geschützt wird.

Die zuvor genannten Maßnahmen haben jedoch den Nachteil, dass die Verteilung des Zinks im gelöteten Wärmetauscher nur schwer zu kontrollieren ist. Zink weist in Aluminium eine besonders hohe Diffusionsgeschwindigkeit auf. Während des Lötprozesses bei Temperaturen im Bereich von typischerweise 600°C kann Zink, abhängig von der Dauer des Lötprozesses, vergleichsweise weite Diffusionswege zurücklegen. Im ungünstigsten Fall kann es dadurch zu eine starken Konzentration von Zink innerhalb der Lötverbindungen zwischen dem MPE und dem Sammlerrohr oder auch zwischen dem MPE und einer Kühllamelle kommen. Dadurch können diese Lötverbindungen zum anodischsten Bereich des Wärmetauschers, d.h. zum Bereich mit dem geringsten Korrosionspotential, werden und damit bevorzugt korrodieren, was zu einem starken Leistungsverlust des Wärmetauschers (bei Korrosion der Lötverbindung zwischen MPE und Kühllamelle) oder sogar zum Ausfall des Wärmetauschers (bei Korrosion der Lötverbindung zwischen MPE und Sammlerrohr) führen kann.

Um einen solchen Leistungsverlust oder gar einen vorzeitigen Ausfall des Wärmetauschers dennoch vermeiden zu können, wäre es erforderlich, für jede Anwendung und in Abhängigkeit von den jeweiligen Lötbedingungen den Zink-Gehalt in jeder Komponente exakt einzustellen. Dies erfordert jedoch einen hohen Aufwand und verhindert den Einsatz standardisierter Werkstoffe.

Vor diesem Hintergrund liegt der vorliegenden Erfindung die Aufgabe zu Grunde, ein Materialkonzept für einen gelöteten Wärmetauscher zur Verfügung zu stellen, mit dem die zuvor beschriebenen Korrosionsprobleme reduziert werden können und das möglichst universell einsetzbar ist.

Diese Aufgabe wird bei einem Wärmetauscher, insbesondere für Kraftfahrzeuge, mit mindestens einem Tauscherröhrchen aus einer Aluminiumlegierung und mit mindestens einer in Fluidverbindung an dem Tauscherröhrchen angeschlossenen Komponente, wobei das Tauscherröhrchen und die Komponente über eine gemeinsame Lötverbindung miteinander verbunden sind, erfindungsgemäß zumindest teilweise dadurch gelöst, dass die an dem Tauscherröhrchen angeschlossene Komponente eine Kernlage aus einer Aluminiumlegierung mit folgender Zusammensetzung aufweist:

| | |
|---|---|
| Si: | 0,50 - 0,7 Gew.-%, |
| Fe: | 0,15 - 0,40 Gew.-%, |
| Cu: | max. 0,10 Gew.-%, vorzugsweise max. 0,05 Gew.-%, insbesondere max. 0,03 Gew.-%, |
| Mn: | 0,9 - 1,5 Gew.-%, vorzugsweise 1,2 bis 1,5 Gew.-%, |
| Mg: | max. 0,30 Gew.-%, vorzugsweise 0,01 - 0,15 Gew.-%, insbesondere 0,01 - 0,10 Gew-%, |
| Cr: | max. 0,25 Gew.-%, vorzugsweise 0,10 bis 0,20 Gew.-%, |
| Zn: | max. 0,50 Gew.-%, vorzugsweise max. 0,25 Gew.-%, insbesondere max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |

unvermeidbare Verunreinigungen einzeln max. 0,05 Gew.-%, insgesamt max. 0,15 Gew.-%, Rest Aluminium.

Unter einem Tauscherröhrchen wird vorliegend ein Rohr bzw. Röhrchen verstanden, das dazu eingerichtet ist, im Betrieb von einem ersten Medienstrom durchströmt zu werden, wobei der erste Medienstrom über das Tauscherröhrchen in thermischem Kontakt mit einem zweiten Medienstrom steht. Der Wärmetauscher weist mindestens ein, vorzugsweise mehrere, beispielsweise mindestens fünf Tauscherröhrchen auf.

An dem Tauscherröhrchen ist mindestens eine Komponente in Fluidverbindung angeschlossen. Hierunter wird verstanden, dass die Komponente derart an mindestens ein Ende des Tauscherröhrchens angeschlossen ist, dass ein im Betrieb durch das Tauscherröhrchen strömender Medienstrom zumindest teilweise auch durch die Komponente strömt. Bei der Komponente kann es sich beispielsweise um ein Sammlerrohr oder um einen Rohrboden handeln, an dem ein oder mehrere Tauscherröhrchen angeschlossen sind.

Das Tauscherröhrchen und die Komponente sind über eine gemeinsame Lötverbindung miteinander verbunden. Bei der Lötverbindung handelt es sich insbesondere um eine Hartlötverbindung, d.h. um eine Lötverbindung, die bei Löttemperaturen von mehr als 450 °C erzeugt wurde. Über die Lötverbindung stehen das Tauscherröhrchen und die Komponente daher in direktem Kontakt, so dass das Tauscherröhrchen und die Komponente ein gekoppeltes galvanisches Korrosionssystem bilden.

Im Rahmen der Erfindung wurde nun erkannt, dass sich die bei gelöteten Wärmetauschern auftretende Korrosionsproblematik dadurch verringern lässt, dass für die an das Tauscherröhrchen angeschlossene Komponente eine Komponente mit einer Kernlage aus der zuvor beschriebenen Aluminiumlegierung verwendet wird. Bei der Komponente kann es sich insbesondere um eine plattierte Komponente mit einer Kernlage aus der zuvor genannten Legierung und einer auf die Kernlage aufplattierten Plattierschicht handeln. Es kann jedoch auch eine unplattierte Komponente verwendet werden. Der Begriff "Kernlage" wird vorliegend sowohl für plattierte als auch für unplattierte Komponenten verwendet, wobei die Kernlage im letzteren Fall auch die einzige Lage der Komponente darstellen kann.

Durch Verwendung dieser Legierung für die Kernlage weist diese im gelöteten Zustand ein niedrigeres Korrosionspotential auf und ist damit unedler als der Großteil der typischerweise für Tauscherröhrchen, insbesondere für MPEs, verwendeten Legierungen. Durch die Kombination dieser Legierung für die Kernlage der Komponente, insbesondere eines Sammlerrohrs oder eines Rohrbodens, mit der Legierung des Tauscherröhrchens, insbesondere des MPEs, bietet die Legierung der Kernsicht galvanischen Schutz für die Tauscherröhrchen.

Somit kann auf den Einsatz zinkhaltiger Beschichtungen auf den Tauscherröhrchen bzw. zinkhaltiger Lotplattierungen auf den Komponenten wie Sammlerrohren oder Rohrböden verzichtet werden bzw. die verwendete Zinkmenge zumindest stark reduziert werden.

Entsprechend ist das Korrosionspotential der Kernlage im gelöteten Zustand damit vorzugsweise geringer als das Korrosionspotential des Tauscherröhrchens des Wärmetauschers.

In Korrosionstests (Sea Water Acidified Test - SWAAT - nach ASTM G85, Annex A3) zeigten gelötete Wärmetauscher bei Verwendung von Sammlerrohren oder Rohrböden aus der zuvor genannten Legierung wesentlich längere Lebensdauern als Wärmetauscher mit Sammlerrohren oder Rohrböden aus handelsüblichen Kernlegierungen ohne angepasstes Korrosionspotential.

Insbesondere konnten durch Verwendung der zuvor genannten Legierung für die Kernlage der Komponente Leckagen der Tauscherröhrchen, insbesondere von MPEs, im Bereich zwischen Sammlerrohren und an diese angrenzenden Lamellen vermieden werden.

Entsprechend wird die oben genannte Aufgabe weiterhin erfindungsgemäß zumindest teilweise gelöst durch die Verwendung einer Aluminiumlegierung oder eines Aluminiumbands mit einer Kernlage aus dieser Aluminiumlegierung zur Herstellung einer Komponente, insbesondere eines Sammlerrohrs oder eines Rohrbodens, für einen Wärmetauscher, insbesondere des zuvor beschriebenen Wärmetauschers, wobei die Komponente dazu eingerichtet ist, in einer Fluidverbindung an einem Tauscherröhrchen des Wärmetauschers angeschlossen zu werden, und wobei die Aluminiumlegierung folgende Zusammensetzung aufweist:

| | |
|---|---|
| Si: | 0,50 - 0,7 Gew.-%, |
| Fe: | 0,15 - 0,40 Gew.-%, |
| Cu: | max. 0,10 Gew.-%, vorzugsweise max. 0,05 Gew.-%, insbesondere max. 0,03 Gew.-%, |
| Mn: | 0,9 - 1,5 Gew.-%, vorzugsweise 1,2 bis 1,5 Gew.-%, |
| Mg: | max. 0,30 Gew.-%, vorzugsweise 0,01 - 0,15 Gew.-%, insbesondere 0,01 - 0,10 Gew.-%, |
| Cr: | max. 0,25 Gew.-%, vorzugsweise 0,10 bis 0,20 Gew.-%, |
| Zn: | max. 0,50 Gew.-%, vorzugsweise max. 0,25 Gew.-%, insbesondere max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |

unvermeidbare Verunreinigungen einzeln max. 0,05 Gew.-%, insgesamt max. 0,15 Gew.-%, Rest Aluminium.

Die zuvor beschriebene Legierung zeichnet sich insbesondere dadurch aus, dass auf die üblicherweise zur Senkung des Korrosionspotentials in beträchtlichem Umfang zugegebenen Legierungselemente Zn und Mg weitgehend verzichtet wurde. Stattdessen wird das gewünschte Korrosionspotential durch eine sorgfältige Abstimmung der Legierungszusammensetzung erreicht.

Die Legierung zeichnet sich insbesondere auch durch den weitgehenden Verzicht auf das Legierungselement Kupfer aus, das bei herkömmlichen Legierungen zur Festigkeitssteigerung und zur Kontrolle des Korrosionspotentials genutzt wird. Zudem wird insbesondere der gelöste Gehalt des Legierungselements Mangan im gelöteten Zustand minimiert. Dies kann insbesondere auch durch eine Abstimmung der Gehalte der Legierungselemente Mn, Si und Fe in Kombination mit der Temperaturführung bei der Homogenisierungsglühung und Vorwärmung zum Warmwalzen erreicht werden.

Trotz des Verzichts auf das festigkeitssteigernde Elemente Kupfer können mit der zuvor beschriebenen Legierung jedoch ausreichende Festigkeitswerte erreicht werden, insbesondere vergleichbare Festigkeitswerte zu konventionellen kupferhaltigen Legierungen. Dadurch kann die beschriebene Legierung ohne weiteres bisher verwendete Legierungen sowohl in Wärmetauschern (z.B. Kondensatoren) mit stranggepressten Rohren (MPEs) als auch in Wärmetauschern mit Rohren, die aus gewalztem Aluminiumblech bestehen, ersetzen.

Weiterhin wurde festgestellt, dass sich die günstige Kombination von Eigenschaften, d.h. ein niedriges Korrosionspotential bei gleichzeitig guter Festigkeit, bei plattierten Aluminiumbändern besonders gut durch eine sorgfältige Abstimmung der Legierungszusammensetzung und des Fertigungsprozesses erreichen lässt.

Entsprechend wird die oben genannte Aufgabe weiterhin erfindungsgemäß zumindest teilweise gelöst durch ein Verfahren zur Herstellung eines Aluminiumbands zur zuvor genannten Verwendung mit folgenden Schritten:
- Gießen eines Walzbarrens im DC-Verfahren aus einer Aluminiumlegierung mit der folgenden Zusammensetzung:

| | |
|---|---|
| Si: | 0,50 - 0,7 Gew.-%, |
| Fe: | 0,15 - 0,40 Gew.-%, |
| Cu: | max. 0,10 Gew.-%, vorzugsweise max. 0,05 Gew.-%, insbesondere max. 0,03 Gew.-%, |
| Mn: | 0,9 - 1,5 Gew.-%, vorzugsweise 1,2 bis 1,5 Gew.-%, |
| Mg: | max. 0,30 Gew.-%, vorzugsweise 0,01 - 0,15 Gew.-%, insbesondere 0,01 - 0,10 Gew.-%, |
| Cr: | max. 0,25 Gew.-%, vorzugsweise 0,10 bis 0,20 Gew.-%, |
| Zn: | max. 0,50 Gew.-%, vorzugsweise max. 0,25 Gew.-%, insbesondere max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |

unvermeidbare Verunreinigungen einzeln max. 0,05 Gew.-%, insgesamt max. 0,15 Gew.-%, Rest Aluminium,
- Homogenisieren des Walzbarrens mittels einer Glühbehandlung bei einer Temperatur im Bereich von 540 °C und 620 °C, vorzugsweise im Bereich von 540 °C und 600 °C, und einer Haltezeit bei der Zieltemperatur zwischen 4 und 12 Stunden,
- Warmwalzen des Walzbarrens zu einem Warmband, insbesondere auf eine Warmbanddicke im Bereich von 2,0 bis 10 mm, vorzugsweise im Bereich von 3 bis 7 mm,
- Kaltwalzen des Warmbands auf Enddicke mit optionaler Zwischenglühung bei einer Temperatur im Bereich von 300 °C bis 450 °C, vorzugsweise im Bereich von 300 °C bis 400 °C, wobei die Enddicke des Kaltbands vorzugsweise im Bereich von 0,1 bis 5 mm, besonders bevorzugt im Bereich von 0,8 bis 3 mm, insbesondere im Bereich von 1,0 bis 2,5 mm, liegt.

Es wurde festgestellt, dass dieses Herstellungsverfahren in Kombination mit der zu vor beschriebenen Legierung zu einem Aluminiumband führt, dessen Kernlage eine gute Festigkeit und gleichzeitig ein niedriges Korrosionspotential aufweist.

Vorzugsweise wird der Walzbarren vor dem Warmwalzen mit einer Plattierauflage versehen. Auf diese Weise wird die Plattierauflage beim nachfolgenden Warmwalzen auf den Walzbarren aufplattiert. Der Walzbarren kann ein- oder beidseitig mit einer Plattierauflage versehen werden. Insbesondere kann der Walzbarren auf einer Seite mit einer Plattierauflage aus einer Lotlegierung versehen werden, bei der es sich zum Beispiel um eine Aluminiumlegierung mit einem Si-Gehalt zwischen 7 und 12 Gew.-% handeln kann. Geeignete Lotlegierungen sind beispielsweise EN-AW 4343 oder EN-AW 4045. Auch alternative Lotlegierungen wie z.B. EN-AW 4104 für einen möglichen Vakuumlötprozess sind möglich.

Alternativ oder zusätzlich können auch eine oder mehrere Korrosionsschutzschichten, beispielsweise aus EN-AW 1050 oder EN-AW 7072, auf den Walzbarren aufplattiert werden. Derartige Korrosionsschutzschichten können beispielsweise auf der Seite aufplattiert werden, die bei der späteren Verwendung in Kontakt mit einem korrosiven Medium steht. Weiterhin kann durch eine solche Korrosionsschutzschicht der Korrosionsschutz auch bei Verwendung eines ungeeigneten Kühlmediums sichergestellt werden. Daher ist diese Ausführungsform insbesondere für Kühlmittelkühler geeignet. Wird das Aluminiumband beispielsweise zur Herstellung eines Sammlerrohres verwendet, so ist die Korrosionsschutzschicht vorzugsweise auf der Rohrinnenseite angeordnet.

Nachfolgend werden die einzelnen Schritte des zuvor beschriebenen Verfahrens näher ausgeführt:

Zunächst wird aus der zuvor beschriebenen Legierung im Direct Chill (DC)-Verfahren Verfahren) ein Walzbarren gegossen. Beim DC-Verfahren wird das flüssige Metall durch eine vorzugsweise gekühlte Form zu einem Walzbarren gegossen. Der entstehende Walzbarren wird sodann unmittelbar weiter gekühlt, beispielsweise durch Beaufschlagung mit Wasser.

Die Homogenisierung der Walzbarren erfolgt durch eine Glühbehandlung bei einer Temperatur zwischen 540 °C und 620 °C, vorzugsweise zwischen 540 °C und 600 °C, und einer Haltezeit bei der Zieltemperatur zwischen 4h und 12h. Durch die Homogenisierung wird maßgeblich der Ausscheidungszustand des Werkstoffs eingestellt, der wiederum das Korrosionspotential des Materials beeinflusst.

Für das optionale Walzplattieren wird der Kernbarren ein- oder beidseitig mit einer Plattierauflage versehen. Die übereinander angeordneten Lagen werden auch als Plattierpaket bezeichnet. Die Dicke der Plattierauflage beträgt vorzugsweise jeweils zwischen 5% und 20% der Gesamtdicke des Plattierpakets.

Beim Warmwalzen wird der Walzbarren bzw. das Plattierpaket auf eine Dicke von vorzugsweise 2,0 bis 10 mm, insbesondere 3 bis 7 mm, gewalzt. Für das Warmwalzen wird der Walzbarren bzw. das Plattierpaket insbesondere zunächst auf eine Temperatur zwischen 450°C und 480°C vorgewärmt und für ca. 3 bis 10 Stunden bei der Zieltemperatur gehalten. Höhere Vorwärmtemperaturen als 480 °C und längere Haltezeiten als 10 Stunden sollten vermieden werden, um den in der Homogenisierung eingestellten Ausscheidungszustand nicht wesentlich zu verändern.

Das Warmband wird beim Kaltwalzen auf die benötigte Enddicke, vorzugsweise auf eine Dicke zwischen 0,1 und 5 mm, besonders bevorzugt zwischen 0,8 und 3 mm, insbesondere zwischen 1,0mm und 2,5mm, gewalzt. Abhängig von der Anwendungen sind jedoch auch kleinere oder größere Enddicken möglich bzw. sinnvoll.

Wird im Endzustand ein walzharter Zustand, z.B. H14 (DIN EN 515) benötigt, erfolgt vorzugsweise an einer Zwischendicke eine rekristallisierende Glühung des Kaltbandes bei Temperaturen zwischen 300 °C und 450 °C, insbesondere zwischen 300°C und 400°C. Die Zwischendicke hängt von der benötigten Enddicke ab, über den genauen Schlussabwalzgrad wird die mechanische Festigkeit des Materials eingestellt. Für einen Zustand H14 ist beispielsweise ein Schlussabwalzgrad im Bereich von 25% bis 30%, beispielsweise von 30%, sinnvoll, um eine günstige Kombination aus Festigkeit im Lieferzustand und Umformbarkeit zu erreichen. Auf das Korrosionspotential im gelöteten Zustand hat der Schlussabwalzgrad dagegen typischerweise nur geringen oder keinen Einfluss.

Für ein Material im weichgeglühten Zustand O (DIN EN 515) erfolgt an Enddicke vorzugsweise eine Weichglühung bei einer Temperatur zwischen 300 °C und 450 °C, insbesondere zwischen 300°C und 400°C. Weiterhin wird das Verfahren für ein Material im weichgeglühten Zustand vorzugsweise mit einer Homogenisierung des Walzbarrens durchgeführt. Alternativ kann durch eine Schlußglühung bei Temperaturen zwischen 240°C und 350°C ein Zustand H24 (DIN EN 515) eingestellt werden. Werden an das Aluminiumband hohe Anforderungen an die Umformbarkeit gestellt, insbesondere für die Herstellung einer Komponente des Wärmetauschers aus dem Aluminiumband, so wird beim Herstellungsverfahren des Aluminiumbands vorzugsweise ein Zustand O (auch als O-Temper bezeichnet) eingestellt. Für die Verwendung des Aluminiumbands zur Herstellung von Rohren, insbesondere eines Sammlerrohrs, als Komponente des Wärmetauschers, wird im Herstellungsverfahren vorzugsweise ein Zustand H24 oder H14 eingestellt. Ein solcher Zustand des Aluminiumbands erleichtert insbesondere das Stanzen von Schlitzen für den Anschluss der Tauscherröhrchen. Es wurde festgestellt, dass eine abschließende Wärmebehandlung wie die Schluss- oder Weichglühung keinen signifikanten Einfluss auf das Korrosionspotential nach dem Löten hat.

Die Aluminiumlegierung, aus der die Kernlage der an dem Tauscherröhrchen angeschlossenen Komponente bzw. das zu deren Herstellung zu verwendende Aluminiumband besteht bzw. aus der der Walzbarren zur Herstellung des Aluminiumbands gegossen wird, weist folgende Zusammensetzung auf:

| | |
|---|---|
| Si: | 0,50 - 0,7 Gew.-%, |
| Fe: | 0,15 - 0,40 Gew.-%, |
| Cu: | max. 0,10 Gew.-%, vorzugsweise max. 0,05 Gew.-%, insbesondere max. 0,03 Gew.-%, |
| Mn: | 0,9 - 1,5 Gew.-%, vorzugsweise 1,2 bis 1,5 Gew.-%, |
| Mg: | max. 0,30 Gew.-%, vorzugsweise 0,01 - 0,15 Gew.-%, insbesondere 0,01 - 0,10 Gew.-%, |
| Cr: | max. 0,25 Gew.-%, vorzugsweise 0,10 bis 0,20 Gew.-%, |
| Zn: | max. 0,50 Gew.-%, vorzugsweise max. 0,25 Gew.-% insbesondere max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |

unvermeidbare Verunreinigungen einzeln max. 0,05 Gew.-%, insgesamt max. 0,15 Gew.-%, Rest Aluminium.

Die Bedeutung der einzelnen Legierungskomponenten wird im Folgenden beschrieben.

Silizium bildet zusammen mit Mangan im Laufe des Fertigungsprozesses Ausscheidungsphasen der sog. α-Phase (Al₁₅Mn₄Si₂). Dies senkt den in der Matrix gelösten Gehalt von Mangan und beeinflusst damit das Korrosionspotential in die gewünschte Richtung und erhöht zudem die mechanische Festigkeit durch Ausscheidungshärtung. Zu hohe Gehalte würden den Schmelzpunkt der Legierung zu stark absenken. Daher beträgt der Si-Gehalt der Aluminiumlegierung maximal 0,7 Gew.-%. Um gleichzeitig ein gewünschtes Korrosionspotential zu erreichen, beträgt der Si-Gehalt der Aluminiumlegierung 0,50 - 0,7 Gew.-%.

Hohe Eisengehalte beeinträchtigen das Korrosionsverhalten und binden außerdem Silizium in Form von intermetallischen Phasen, wodurch der zuvor für Silizium beschriebene Effekt der Verbindungsbildung von Silizium mit Mangan eingeschränkt wird. Daher ist der Fe-Gehalt der Aluminiumlegierung auf maximal 0,40 Gew.-% beschränkt. Weiter weist die Aluminiumlegierung einen Fe-Gehalt im Bereich von 0,15 - 0,40 Gew.-%, auf. Ein geringerer Fe-Gehalt als 0,15 Gew.-% oder gar 0,10 Gew.-% würde die Auswahl an einsetzbaren Rohstoffen (Primäraluminium und Schrott) sehr stark einschränken und damit die Rohstoffkosten erhöhen. Mit einem Fe-Gehalt im Bereich 0,15 - 0,40 Gew.-%, wird ein besonders guter Kompromiss für ein gutes Korrosionsverhalten einerseits und Wirtschaftlichkeit andererseits erreicht.

Kupfer verschiebt das Korrosionspotential der Legierung stark in eine positive und daher unerwünschte Richtung. Daher wird der Cu-Gehalt der Aluminiumlegierung auf unvermeidbare Spuren von maximal max. 0,10 Gew.-%, vorzugsweise sogar max. 0,05 Gew.-% beschränkt. Da Kupfer zudem aus dem Kernlagenwerkstoff in den Bereich von Lötverbindungen, insbesondere von Kehlnähten, diffundiert und dort Korrosion begünstigen kann, wird der Cu-Gehalt der Legierung weiter bevorzugt sogar auf max. 0,03 Gew.-% beschränkt.

Mangan trägt zur Festigkeitssteigerung bei. Daher beträgt der Mn-Gehalt der Aluminiumlegierung mindestens 0,9 Gew.-%. Zu hohe Gehalte an gelöstem Mangan verschieben das Korrosionspotential allerdings in eine unerwünschte positive Richtung, so dass der Mn-Gehalt der Legierung maximal 1,5 Gew.-% beträgt. Insbesondere wird der Mn-Gehalt an den Si-Gehalt der Legierung angepasst. So bildet Mn während der Homogenisierungsglühung bzw. der Vorwärmung zum Warmwalzen mit Si und Al intermetallische Ausscheidungsphasen. Dadurch wird der gelöste Mn-Gehalt abgesenkt und das Korrosionspotential wird in die gewünschte Richtung verschoben. Vorzugsweise wird daher ein Verhältnis Mn:Si im Bereich von 1,7 bis 3, vorzugsweise von 2 bis 3, insbesondere von 2 bis 2,5 eingestellt. Das Verhältnis bezieht sich auf die Anteile in Gew.-%. Vorzugsweise liegt der Mn-Gehalt im Bereich von 1,2 bis 1,5 Gew.-%. In diesem Bereich wurden gute Festigkeiten bei gleichzeitig hinreichend niedrigem Korrosionspotential erreicht.

Magnesium erhöht die Festigkeit durch Mischkristallhärtung und verschiebt das Korrosionspotential in eine unedle, d.h. in die gewünschte Richtung. Allerdings beeinträchtigen höhere Mg-Gehalte das Lötverhalten im gebräuchlichen CAB-Lötprozess (CAB: Controlled Atmosphere Brazing). Daher ist der Mg-Gehalt der Legierung auf max. 0,30 Gew.-%, vorzugsweise sogar auf max. 0.10 Gew.-% beschränkt. Es wurde andererseits festgestellt, dass sich bereits durch eine gezielte Zugabe einer geringen Mg-Menge im Bereich von 0,01 - 0,15 Gew.-%, insbesondere 0,01 - 0,10 Gew.-%, die Festigkeit und das Korrosionspotential der Kernlage einstellen lässt, ohne dass das Lötverhalten nachteilig beeinflusst wird.

Chrom erhöht die Festigkeit und kompensiert bei der Legierung zumindest teilweise den bewussten Verzicht auf Kupfer. Da sich bei höheren Cr-Gehalten jedoch unerwünschte grobe intermetallische Gussphasen ausscheiden können, ist der Cr-Gehalt der Legierung auf maximal 0,25 Gew.-% beschränkt. Vorzugsweise beträgt der Cr-Gehalt 0,10 bis 0,20 Gew.-%. In diesem Bereich wurde eine gute Festigkeitssteigerung ohne wesentliche Ausscheidung der unerwünschten Gussphasen erreicht.

Der Zn-Gehalt der Legierung ist wegen der zuvor beschriebenen Korrosionsproblematik durch Zinkdiffusion auf max. 0,50 Gew.-%, vorzugsweise auf max. 0,25 Gew.-% und besonders bevorzugt sogar auf max. 0,10 Gew.-% beschränkt. Da Zink das Korrosionspotential stark in eine unedle Richtung verschiebt, kann es jedoch bei Bedarf für eine Feinabstimmung des Korrosionspotentials in kleinen Mengen zugegeben werden, insbesondere in einem Bereich von 0,01 - 0,10 Gew.-%.

Ti bzw. Zr können bis zu einem Gehalt von max. 0,25 Gew.-% in der Legierung enthalten sein. Vorzugsweise beträgt der Gehalt von Ti und/oder von Zr max. 0,05 Gew.-%.

Nachfolgend werden verschiedene Ausführungsformen des Wärmtauschers, der Verwendung der Aluminiumlegierung bzw. des Aluminiumbands sowie des Verfahrens zur Herstellung des Aluminiumbands beschrieben, wobei die einzelnen Ausführungsformen jeweils sowohl auf den Wärmtauscher, auf die Verwendung der Aluminiumlegierung bzw. des Aluminiumbands sowie auf das Verfahren zur Herstellung des Aluminiumbands übertragen werden können. Die Ausführungsformen können weiterhin auch untereinander kombiniert werden.

Bei einer ersten Ausführungsform weist die Aluminiumlegierung vorzugsweise die folgende Zusammensetzung auf:

| | |
|---|---|
| Si: | 0,5 - 0,7 Gew.-%, |
| Fe: | 0,15 - 0,40 Gew.-%, |
| Cu: | max. 0,05 Gew.-%, vorzugsweise max. 0,03 Gew.-%, |
| Mn: | 1,2 bis 1,5 Gew.-%, |
| Mg: | max. 0,10 Gew.-%, vorzugsweise 0,01 - 0,10 Gew.-%, |
| Cr: | 0,10 bis 0,20 Gew.-%, |
| Zn: | max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |

unvermeidbare Verunreinigungen einzeln max. 0,05 Gew.-%, insgesamt max. 0,15 Gew.-%, Rest Aluminium.

Auf diese Weise wird eine Aluminiumlegierung mit guter Festigkeit und gleichzeitig ausreichend niedrigem Korrosionspotential erreicht.

Bei einer weiteren Ausführungsform ist die an dem Tauscherröhrchen angeschlossene Komponente ein Sammlerrohr oder ein Rohrboden. Bei Wärmetauschern werden Tauscherröhrchen typischerweise direkt an Sammlerrohre, bzw. an Rohrböden angeschlossen, so dass diese Komponenten mit dem Tauscherröhrchen ein direktes galvanisch gekoppeltes Korrosionssystem bilden. Ein Sammlerrohr oder ein Rohrboden mit geringerem Korrosionspotential als das Tauscherröhrchen ist folglich gut geeignet ist, das Tauscherröhrchen anodisch zu schützen.

Bei einer weiteren Ausführungsform weist die an dem Tauscherröhrchen angeschlossene Komponente im gelöteten Zustand ein Korrosionspotential gegenüber einer Calomel-Elektrode (Saturated Calomel Electrode - SCE) nach ASTM G69 von -740 mV oder weniger auf. Es wurde festgestellt, dass mit der zuvor beschriebenen Legierung, insbesondere in Kombination mit dem zuvor beschriebenen Herstellungsverfahren für Aluminiumbänder, eine Komponente mit einem derart geringen Korrosionspotential hergestellt werden kann, die gleichzeitig eine ausreichende Festigkeit aufweist. Mit einem Korrosionspotential von -740 mV oder weniger ist die Komponente insbesondere unedler als üblicherweise verwendete Legierungen wie zum Beispiel vom Typ EN-AW 3003, EN-AW 3005 oder EN-AW 3017, deren Korrosionspotentiale typischerweise im Bereich von -660 mV bis -720 mV liegt.

Bei einer weiteren Ausführungsform ist das Tauscherröhrchen ein stranggepresstes Mehrkammerröhrchen (MPE). Stranggepresste Mehrkammerröhrchen weisen typischerweise ein recht niedriges Korrosionspotential auf, so dass diese besonders anfällig für Korrosion sind. Die Verwendung der zuvor beschriebenen Legierung für die Kernlage der Komponente bietet daher besonders für Wärmetauscher mit MPEs große Vorteile.

Bei einer weiteren Ausführungsform besteht das Tauscherröhrchen aus einer Aluminiumlegierung vom Typ 3xxx. Das Korrosionspotential nach dem Löten liegt bei einer solchen Legierung typischerweise zwischen -720mV und -760mV. Beispielsweise kann das Tauscherröhrchen aus einer Aluminiumlegierung vom Typ EN-AW 3102 bestehen. Das Korrosionspotential liegt bei dieser Legierung im Bereich von ca. -735mV bis - 745mV. Die Aluminiumlegierung des Tauscherröhrchens kann insbesondere folgende Zusammensetzung aufweisen: Si: ≤ 0,40 Gew.-%, Fe: ≤ 0,7 Gew.-%, Cu: ≤ 0,10 Gew.-%, Mn: 0,05 - 0,40 Gew.-%, Zn ≤ 0,30 Gew.-%, Ti ≤ 0,10 Gew.-%, Verunreinigungen einzeln ≤ 0,05, gesamt ≤ 0,15, Rest Aluminium.3xxx Legierungen wie z.B. EN-AW 3102 weisen ein niedriges Korrosionspotential auf und sind damit anfällig für Korrosion. Die Verwendung der zuvor beschriebenen Legierung für die Kernlage der Komponente bietet daher besonders in Kombination mit Tauscherröhrchen aus diesen Legierungen große Vorteile.

Bei einer weiteren Ausführungsform weist das Lot der gemeinsamen Lötverbindung des Tauscherröhrchens und der daran angeschlossenen Komponente einen Zn-Gehalt von maximal 1,2 Gew.-%, vorzugsweise von maximal 0,50 Gew.-%, weiter bevorzugt von maximal 0,20 Gew.-%, auf. Bevorzugt wird ein Lot aus einer Standardlotlegierungen ohne Zn, wie zum Beispiel EN-AW 4043, EN-AW 4045 oder für Vakuumlöten EN-AW 4104 verwendet. Bei den Standardlotlegierungen ist der Zn-Gehalt auf Werte von maximal 0,50 Gew.-%, insbesondere maximal 0,20 Gew.-% begrenzt. In speziellen Fällen, wie z.B. bei Verwendung von Röhrchen aus sehr niedrig legierten Werkstoffen und einem Korrosionspotential gelötet von -750mV und weniger, kann die Verwendung eines Lotes mit einem Zusatz von max. 1,2% Zn sinnvoll sein.

Bei einer weiteren Ausführungsform weist die an dem Tauscherröhrchen angeschlossene Komponente eine aufplattierte Lotschicht aus einer Lotlegierung auf, wobei die Lotlegierung eine Aluminiumlegierung mit einem Si-Gehalt von 7 bis 12 Gew.-% und mit einem Zn-Gehalt von max. 0,50 Gew.-%, insbesondere max. 0,20 Gew.-% ist. Bei einer entsprechenden Ausführungsform der Verwendung weist das Aluminiumband eine auf die Kernlage aufplattierte Lotschicht aus einer Lotlegierung auf, wobei die Lotlegierung eine Aluminiumlegierung mit einem Si-Gehalt von 7 bis 12 Gew.-% und mit einem Zn-Gehalt von max. 0,50 Gew.-%, vorzugsweise max. 0,20 Gew.-%, ist. Bei einer entsprechenden Ausführungsform des Verfahrens besteht die Plattierauflage aus einer Lotlegierung, wobei die Lotlegierung eine Aluminiumlegierung mit einem Si-Gehalt von 7 bis 12 Gew.-% und mit einem Zn-Gehalt von max. 0,50 Gew.-%, vorzugsweise max. 0,20 Gew.-%, ist.

Da der Korrosionsschutz des Tauscherröhrchens durch die Kernschicht der Komponente gewährleistet wird, kann auf die Verwendung Zn-haltiger Lote bzw. Zn-haltiger Lotplattierschichten verzichtet und damit die Problematik der unkontrollierten Zn-Diffusion vermieden werden.

Im Folgenden werden weitere Ausführungsformen 1 bis 7 des Wärmetauschers, weitere Ausführungsformen 8 und 9 der Verwendung und weitere Ausführungsformen 10 bis 13 des Verfahrens beschrieben:
1. Wärmetauscher, insbesondere für Kraftfahrzeuge,
- mit mindestens einem Tauscherröhrchen aus einer Aluminiumlegierung und mit mindestens einer in Fluidverbindung an dem Tauscherröhrchen angeschlossenen Komponente,
- wobei das Tauscherröhrchen und die Komponente über eine gemeinsame Lötverbindung miteinander verbunden sind, dadurch gekennzeichnet,
- dass die an dem Tauscherröhrchen angeschlossene Komponente eine Kernlage aus einer Aluminiumlegierung mit folgender Zusammensetzung aufweist:

| | |
|---|---|
| Si: | 0,50 - 0,70 Gew.-%, |
| Fe: | 0,15 - 0,40 Gew.-%, |
| Cu: | max. 0,10 Gew.-%, vorzugsweise max. 0,05 Gew.-%, |
| Mn: | 0,90 - 1,50 Gew.-%, vorzugsweise 1,20 bis 1,50 Gew.-%, |
| Mg: | max. 0,30 Gew.-%, vorzugsweise max. 0,10 Gew.-%, |
| Cr: | max. 0,25 Gew.-%, vorzugsweise 0,10 bis 0,20 Gew.-%, |
| Zn: | max. 0,50 Gew.-%, vorzugsweise max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |

unvermeidbare Verunreinigungen einzeln max. 0,05 Gew.-%, insgesamt max. 0,15 Gew.-%, Rest Aluminium.
2. Wärmetauscher nach Ausführungsform 1, wobei die an dem Tauscherröhrchen angeschlossene Komponente ein Sammlerrohr oder ein Rohrboden ist.
3. Wärmetauscher nach Ausführungsform 1 oder 2, wobei die an dem Tauscherröhrchen angeschlossene Komponente ein Korrosionspotential nach ASTM G69 von -740 mV oder unedler aufweist.
4. Wärmetauscher nach einer der Ausführungsformen 1 bis 3, wobei das Tauscherröhrchen ein stranggepresstes Mehrkammerröhrchen ist.
5. Wärmetauscher nach einer der Ausführungsformen 1 bis 4, wobei das Tauscherröhrchen aus einer Aluminiumlegierung vom Typ 3xxx besteht.
6. Wärmetauscher nach einer der Ausführungsformen 1 bis 5, wobei die gemeinsame Lötverbindung des Tauscherröhrchens und der daran angeschlossenen Komponente unter Verwendung eines Lots erzeugt wurde, das einen Zn-Gehalt von maximal 0,2 Gew.-% aufweist.
7. Wärmetauscher nach einer der Ausführungsformen 1 bis 6, wobei die an dem Tauscherröhrchen angeschlossene Komponente eine aufplattierte Lotschicht aus einer Lotlegierung aufweist, wobei die Lotlegierung eine Aluminiumlegierung mit einem Si-Gehalt von 7 bis 12 Gew.-% und mit einem Zn-Gehalt von max. 0,2 Gew.-% ist.
8. Verwendung einer Aluminiumlegierung oder eines Aluminiumbands mit einer Kernlage aus dieser Aluminiumlegierung zur Herstellung einer Komponente, insbesondere eines Sammlerrohrs oder eines Rohrbodens, für einen Wärmetauscher, insbesondere eines Wärmetauschers nach einer der Ausführungsformen 1 bis 7, wobei die Komponente dazu eingerichtet ist, in einer Fluidverbindung an einem Tauscherröhrchen des Wärmetauschers angeschlossen zu werden, wobei die Aluminiumlegierung folgende Zusammensetzung aufweist:

| | |
|---|---|
| Si: | 0,50 - 0,70 Gew.-%, |
| Fe: | 0,15 - 0,40 Gew.-%, |
| Cu: | max. 0,10 Gew.-%, vorzugsweise max. 0,05 Gew.-%, |
| Mn: | 0,90 - 1,50 Gew.-%, vorzugsweise 1,20 bis 1,50 Gew.-%, |
| Mg: | max. 0,30 Gew.-%, vorzugsweise max. 0,10 Gew.-%, |
| Cr: | max. 0,25 Gew.-%, vorzugsweise 0,10 bis 0,20 Gew.-%, |
| Zn: | max. 0,50 Gew.-%, vorzugsweise max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |

unvermeidbare Verunreinigungen einzeln max. 0,05 Gew.-%, insgesamt max. 0,15 Gew.-%, Rest Aluminium.
9. Verwendung nach Ausführungsform 8, wobei das Aluminiumband eine auf die Kernlage aufplattierte Lotschicht aus einer Lotlegierung aufweist und wobei die Lotlegierung eine Aluminiumlegierung mit einem Si-Gehalt von 7 bis 12 Gew.-% und mit einem Zn-Gehalt von max. 0,2 Gew.-% ist.
10. Verfahren zur Herstellung eines Aluminiumbands zur Verwendung nach einer der Ausführungsformen 8 oder 9 mit folgenden Schritten:
- Gießen eines Walzbarrens im DC-Verfahren aus einer Aluminiumlegierung mit der folgenden Zusammensetzung:

| | |
|---|---|
| Si: | 0,50 - 0,70 Gew.-%, |
| Fe: | 0,15 - 0,40 Gew.-%, |
| Cu: | max. 0,10 Gew.-%, vorzugsweise max. 0,05 Gew.-%, |
| Mn: | 0,90 - 1,50 Gew.-%, vorzugsweise 1,20 bis 1,50 Gew.-%, |
| Mg: | max. 0,30 Gew.-%, vorzugsweise max. 0,10 Gew.-%, |
| Cr: | max. 0,25 Gew.-%, vorzugsweise 0,10 bis 0,20 Gew.-%, |
| Zn: | max. 0,50 Gew.-%, vorzugsweise max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |

unvermeidbare Verunreinigungen einzeln max. 0,05 Gew.-%, insgesamt max. 0,15 Gew.-%, Rest Aluminium,
- Homogenisieren des Walzbarrens mittels einer Glühbehandlung bei einer Temperatur im Bereich von 540 °C und 600 °C und einer Haltezeit bei der Zieltemperatur zwischen 4 und 12 Stunden,
- Warmwalzen des Warmbarrens zu einem Warmband, insbesondere auf eine Warmbanddicke im Bereich von 3 bis 7 mm,
- Kaltwalzen des Warmbands auf Enddicke mit optionaler Zwischenglühung bei einer Temperatur im Bereich von 300 °C bis 400 °C, wobei die Enddicke des Kaltbands vorzugsweise im Bereich von 1,0 bis 2,5 mm liegt.
11. Verfahren nach Ausführungsform 10 zur Herstellung eines walzplattierten Aluminiumbands, bei dem aus der Walzbarren vor dem Warmwalzen mit einer Plattierauflage versehen wird.
12. Verfahren nach Ausführungsform 10 oder 11, wobei die Plattierauflage aus einer Lotlegierung besteht und wobei die Lotlegierung eine Aluminiumlegierung mit einem Si-Gehalt von 7 bis 12 Gew.-% und mit einem Zn-Gehalt von max. 0,2 Gew.-% ist.
13. Verfahren nach einer der Ausführungsformen 10 bis 12, wobei das plattierte Kaltband an Enddicke bei einer Temperatur im Bereich von 300 °C und 400 °C weichgeglüht oder bei einer Temperatur im Bereich von 240 °C und 350 °C schlussgeglüht wird.

Weitere Merkmale und Vorteile des Wärmetauschers, der Verwendung und des Verfahrens können der nachfolgenden Beschreibung von Ausführungsbeispielen entnommen werden, wobei auf die beigefügte Zeichnung Bezug genommen wird.

In der Zeichnung zeigen
- Fig. 1a-b: ein Ausführungsbeispiel des Wärmetauschers sowie der Verwendung einer Aluminiumlegierung bzw. eines Aluminiumbands und
- Fig. 2: Ausführungsbeispiele des Verfahrens zur Herstellung eines Aluminiumbands.

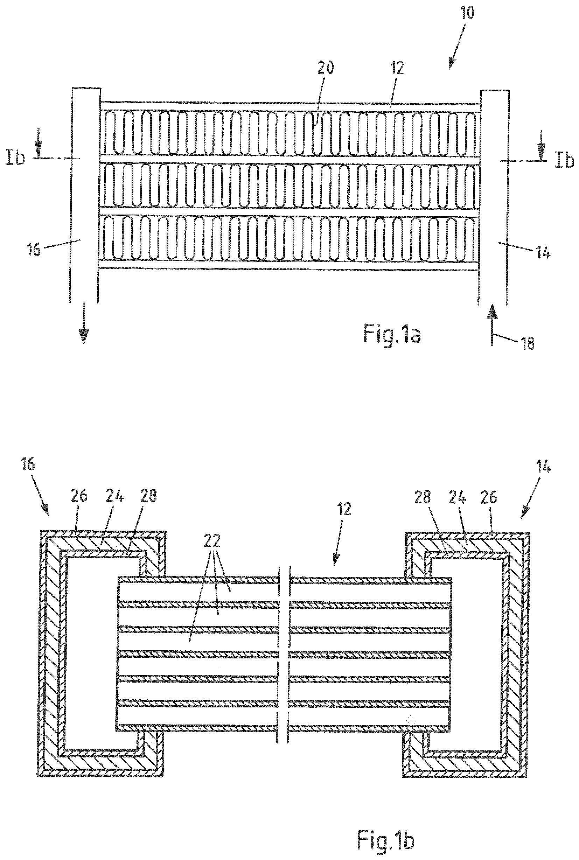

Die Fig. 1a-b zeigen ein Ausführungsbeispiel des Wärmetauschers sowie der Verwendung einer Aluminiumlegierung bzw. eines Aluminiumbands. Fig. 1a zeigt eine schematische Seitenansicht des Wärmetauschers und Fig. 1b zeigt einen Schnitt durch die in Fig. 1a mit "Ib" bezeichnete Ebene

Der Wärmetauscher 10 weist eine Mehrzahl von Tauscherröhrchen 12 auf, deren Enden jeweils an ein erstes Sammlerrohr 14 sowie an ein zweites Sammlerrohr 16 angeschlossen sind. Die Sammlerrohre 14, 16 stellen damit jeweils eine an die Tauscherröhrchen 12 angeschlossene Komponente dar.

Im Betrieb wird ein Medienstrom 18 in das erste Sammlerrohr 14 eingeleitet, der sich auf die Tauscherröhrchen 12 verteilt und schließlich durch das Sammlerrohr 16 wieder aus dem Wärmetauscher 10 herausfließt. Der Bereich der Tauscherröhrchen 12 wird im Betrieb von einem zweiten Medienstrom angeströmt, der dadurch mit der äußeren Oberfläche der Tauscherröhrchen 12 in thermischen Kontakt kommt, so dass es zu einem Wärmeaustausch zwischen dem ersten und dem zweiten Medienstrom kommt. Zur Vergrößerung der für den Wärmeaustausch nutzbaren Oberfläche sind zwischen den Tauscherröhrchen 12 Lamellen 20 angeordnet, die jeweils mit den Tauscherröhrchen 12 verlötet sind.

Bei den Tauscherröhrchen 12 handelt es sich um stranggepresste Mehrkammerröhrchen, die eine Mehrzahl von Kanälen 22 aufweisen, so dass die Kontaktoberfläche zwischen dem ersten Medium 18 und den Tauscherröhrchen 12 erhöht und der Wärmeaustausch damit verbessert wird. Die Tauscherröhrchen 12 bestehen aus einer niederlegierten Aluminiumlegierung, beispielsweise vom Typ EN-AW 3102, und weisen daher ein recht niedriges Korrosionspotential auf.

Die Sammlerrohre 14, 16 weisen einen mehrschichtigen Aufbau auf mit einer Kernlage 24 und einer aufplattierten Lotschicht 26. Zusätzlich kann auf der Innenseite der Sammlerrohre 14, 16 auch noch eine aufplattierte Korrosionsschutzschicht 28 vorgesehen sein. Die Sammlerrohre 14, 16 können insbesondere aus einem plattierten Aluminiumband hergestellt sein, dass einen entsprechenden Aufbau mit einer Kernlage, einer aufplattierten Lotschicht und ggf. einer auf die gegenüberliegende Seite der Kernlage aufplattierte Korrosionsschutzschicht aufweist.

Die Tauscherröhrchen 12 sind mit den Sammlerrohren 14, 16 hartverlötet, wobei das Material der Lotschicht 26 als Lot wirkt. Bei der Lotschicht 26 kann es sich insbesondere um eine Aluminiumlotlegierung mit einem Si-Gehalt von 7 bis 12 Gew.-% handeln.

Die Tauscherröhrchen 12 bilden auf diese Weise mit den Sammlerrohren 14, 16 ein gekoppeltes galvanisches System. Bei Wärmetauschern aus dem Stand der Technik bestand das Problem, dass die Tauscherröhrchen aufgrund ihres geringen Korrosionspotentials besonders stark von Korrosion betroffen waren, wodurch es frühzeitig zu Leckagen kommen konnte. Dieses Problem wird bei dem Wärmetauscher 10 behoben, indem für die Kernlage 24 der Sammlerrohre 14, 16 vorliegend eine Aluminiumlegierung mit folgender Zusammensetzung verwendet wird:

| | |
|---|---|
| Si: | 0,50 - 0,7 Gew.-%, |
| Fe: | 0,15 - 0,40 Gew.-%, |
| Cu: | max. 0,05 Gew.-%, insbesondere max. 0,03 Gew.-%, |
| Mn: | 1,2 - 1,5 Gew.-%, |
| Mg: | max. 0,10 Gew.-%, insbesondere 0,01 - 0,10 Gew.-%, |
| Cr: | 0,10 - 0,20 Gew.-%, |
| Zn: | max. 0,10 Gew.-%, |
| Ti: | max. 0,25 Gew.-%, |
| Zr: | max. 0,25 Gew.-%, |

unvermeidbare Verunreinigungen einzeln max. 0,05 Gew.-%, insgesamt max. 0,15 Gew.-%, Rest Aluminium.

Mit dieser Legierungszusammensetzung kann erreicht werden, dass die Kernlage 24 ein geringeres Korrosionspotential aufweist als die Tauscherröhrchen 12, so dass letztere durch die Sammlerrohre 14, 16 anodisch geschützt werden.

Wird der Wärmetauscher 10 einer korrosionsfördernden Umgebung ausgesetzt, beispielsweise im Motorraum eines Kraftfahrzeuges, so greift die Korrosion zunächst an den Sammlerrohren 14 und 16 und ggf. an den Lamellen 20 an, während die für den Betrieb des Wärmetauschers 10 kritischeren Tauscherröhrchen 12 nur einer geringen Korrosion unterliegen. Dadurch lässt sich die Lebensdauer des Wärmetauschers 10 verlängern.

Mit dem anodischen Schutz der Tauscherröhrchen 12 durch die Sammlerrohre 14, 16 kann insbesondere auch auf die Verwendung Zn-haltiger Lote verzichtet werden, die im Stand der Technik teilweise als Korrosionsschutz für die Tauscherröhrchen verwendet wurden. Die Aluminiumlotlegierung der Lotschicht 26 weist entsprechend vorzugsweise einen Zn-Gehalt von maximal 0,50 Gew.-%, weiter bevorzugt von max. 0,20 Gew.-%, auf. Hierdurch lässt sich eine schwer kontrollierbare Diffusion von Zn im Wärmetauscher verhindern.

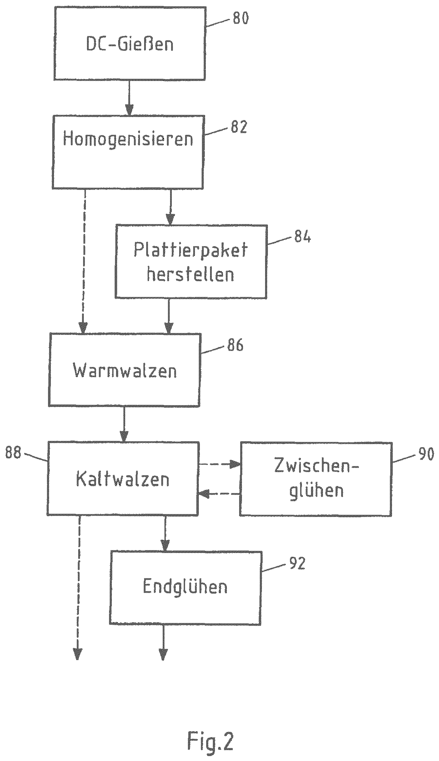

Figur 2 zeigt ein Ausführungsbeispiel eines Verfahrens zur Herstellung eines Aluminiumbands, welches insbesondere zur Herstellung der Sammlerrohre 14, 16 aus Fig. 1a-b verwendet werden kann.

In einem ersten Schritt 80 wird eine Legierung aus der oben genannten Zusammensetzung für die Kernlage 24 im DC-Verfahren zu einem Walzbarren gegossen. Dieser Walzbarren wird in einem nachfolgenden Schritt 82 bei einer Temperatur im Bereich von 540° C und 600° C und einer Haltezeit bei Zieltemperatur von 4 bis 12 Stunden homogenisiert.

Wenn ein plattiertes Aluminiumband hergestellt werden soll, beispielsweise mit einer Lotschicht und/oder einer Korrosionsschutzschicht, wird in einem nachfolgenden Schritt 84 aus dem Walzbarren als Kernlage und einer oder mehreren über oder unter der Kernlage angeordneten Plattierlagen ein Plattierpaket hergestellt. Die Dicke der Plattierlagen beträgt vorzugsweise jeweils zwischen 5 und 20 % der Gesamtdicke des Plattierpakets.

Der Walzbarren bzw. das Plattierpaket wird in einem nachfolgenden Schritt 86 warmgewalzt, insbesondere auf eine Dicke im Bereich von 3 - 7 mm. Vor dem Warmwalzen wird der Walzbarren bzw. das Plattierpaket vorgewärmt, und zwar vorzugsweise auf eine Temperatur im Bereich von 450 - 480 °C mit einer Haltezeit bei der Zieltemperatur von 3 - 10 h.

Das ggf. walzplattierte Warmband wird in einem nachfolgenden Schritt 88 kaltgewalzt, vorzugsweise auf eine Enddicke von 1,0 bis 2,5 mm. Während des Kaltwalzens kann bei einer Zwischendicke in einem Zwischenschritt 90 ein Zwischenglühen (Rekristallisationsglühen) erfolgen, vorzugsweise bei einer Temperatur im Bereich von 300 und 400 °C.

Nach dem Kaltwalzen auf Enddicke kann optional in einem nachfolgenden Schritt 92 noch ein Endglühen erfolgen. Durch ein Weichglühen bei einer Temperatur im Bereich 300 - 400 °C kann auf diese Weise ein Material im weichgeglühten Zustand O erreicht werden. Für ein Material im Zustand H24 kann alternativ auch eine Schlussglühung bei einer Temperatur im Bereich 240 - 350 °C erfolgen.

Es wurden Versuche durchgeführt, aus denen sich die gewünschte Kombination eines niedrigen Korrosionspotentials bei gleichzeitig guter Festigkeit für Komponenten aus der beschriebenen Legierung ergibt.

**Tabelle 1**

| **Legierung** | **Si** | **Fe** | **Cu** | **Mn** | **Mg** | **Cr** | **Zn** | **Ti** | **Zr** | **Al** |
|---|---|---|---|---|---|---|---|---|---|---|
| **A** | 0,64 | 0,31 | 0,00 | 1,40 | 0,08 | 0,13 | 0,005 | 0,008 | - | Rest |
| **B** | 0,62 | 0,26 | 0,00 | 1,37 | 0,20 | 0,00 | 0,001 | 0,006 | - | Rest |
| **C** | 0,50 | 0,30 | 0,27 | 1,09 | 0,27 | 0,20 | 0,001 | 0,007 | - | Rest |
| **D** | 0,59 | 0,29 | 0,00 | 1,34 | 0,06 | 0,13 | 0,01 | - | - | Rest |
| **E** | 0,60 | 0,28 | 0,02 | 1,41 | 0,06 | 0,12 | 0,00 | - | - | Rest |
| **F** | 0,59 | 0,30 | 0,00 | 1,35 | 0,07 | 0,12 | 0,01 | - | - | Rest |
| **EN-AW 4045** | 9,87 | 0,21 | 0,00 | 0,01 | 0,01 | 0,00 | 0,005 | 0,005 | - | Rest |

Tabelle 1 zeigt die bei den Versuchen verwendeten Legierungszusammensetzungen (alle Mengenangaben in Gew.-%). Die Legierungen A und B aus Tabelle 1 sind erfindungsgemäß, wobei die Legierung A einer bevorzugten Ausführungsform der Erfindung entspricht. Bei der Legierung C handelt es sich um eine Vergleichslegierung, die als Kernlegierung im Wärmetauscherbereich Anwendung findet. Die Legierungen D bis F sind wiederum erfindungsgemäß, und zwar entsprechend einer bevorzugten Ausführungsform der Erfindung. Die weiterhin angegebene Lotlegierung vom Typ EN-AW 4045 wurde in den Versuchen A - C und F für die Lotplattierschicht verwendet.

Mit dem in Fig. 2 dargestellten Verfahren wurden walzplattierte Aluminiumbänder hergestellt, wobei die Legierungen A, B, C, D, E und F jeweils für die Kernlage und die in Tabelle 1 genannte Legierung vom Typ EN-AW 4045 jeweils für die Lotplattierlagen bei den Versuchen A, B, C und F verwendet wurden. Bei den Versuchen D und E wurde für die Lotplattierlagen jeweils eine alternative Legierung vom Typ EN-AW4343 verwendet, wobei der Lotlegierung im Versuch E zusätzlich 1 Gew.-% Zn zugegeben wurde.

In den Fällen A - C wurden jeweils 60kg Chargen der betreffenden Legierungen erzeugt und im DC-Gießverfahren zu Barren im Querschnitt 335mm x 125mm abgegossen. In den Fällen D - F wurden jeweils Chargen von mehreren Tonnen der betreffenden Legierung erzeugt und im DC-Gießverfahren zu größeren Barren (Querschnitt ca. 500 x ca. 1500 mm) abgegossen. Für die Herstellung von Bandmaterial wurde zunächst ein Lotbarren EN-AW 4045 bzw. EN-AW 4343 auf die benötigte Dicke für eine Plattierschicht von 7,5% der Gesamtdicke abgewalzt. Die Kernbarren aus den Legierungen A, B, C bzw. D wurden bei einer Temperatur von 575°C und die Kernbarren aus den Legierungen E und F bei einer Temperatur von 600°C über eine Haltezeit von 6h einer Homogenisierungsglühung unterzogen. Danach wurden mit der vorgewalzten Lotauflage jeweils Plattierpakete mit einer einseitigen Lotauflage von 7,5% der Gesamtdicke hergestellt. Diese wurden jeweils mit einer Temperatur von 470°C und einer Haltezeit von mind. 3h vorgewärmt und anschließend auf eine Dicke von 7,0mm warmgewalzt.

Darauf folgte jeweils ein Kaltwalzen mit mehreren Stichen auf eine Enddicke von 1,5mm (Versuche A-C und E) bzw. 1,0 mm (Versuch D) bzw. 1,6 mm (Versuch F). Abschließend erfolgte jeweils eine Weichglühung zur Einstellung eines Temper O-Zustands bei einer Temperatur von 350°C (für die Bänder mit den Kernlagenlegierungen A und B) bzw. von 320°C (für das Band mit der Kernlagenlegierung C) bzw. von 400°C (für die Bänder mit den Kernlagenlegierungen D bis F), und zwar jeweils mit einer Haltezeit von 2h.

Von den Bändern mit Kernlagenlegierung A und B wurde zusätzlich jeweils ein Bandabschnitt bei einer Zwischendicke von 2,15mm einer Weichglühung bei 350°C und einer Haltezeit von 2h unterzogen und anschließend mit einem Schlussabwalzgrad von 30% auf eine Enddicke von 1,5mm im Temper H14 kaltgewalzt.

Aus den auf diese Weise hergestellten, lotplattierten Bändern wurden Proben entnommen und zur Prüfung der Eigenschaften im gelöteten Zustand jeweils einer Lötsimulation unterzogen, die einem typischen industriellen Lötzyklus entspricht. Dazu wurden die Proben mit einer Aufheizrate von 0,9 °C/s auf eine Temperatur von 600°C aufgeheizt und nach einer Haltezeit von 5 min. mit einer Rate von 0,9 °C/s abgekühlt.

An den Proben wurden die mechanischen Eigenschaften der Bänder bestimmt. Die Messung der mechanischen Eigenschaften wurde jeweils vor und nach der Lötsimulation durchgeführt, und zwar jeweils in Walzrichtung.

Die nachfolgende Tabelle 2 zeigt die Ergebnisse der Messungen der mechanischen Eigenschaften. Die erste Spalte gibt jeweils die Legierungszusammensetzung der Kernlage an, die zweite Spalte gibt jeweils den Zustand des walzplattierten Bands an, aus dem die jeweilige Probe entnommen wurde. R_{p0,2}, Rₘ, A_{g} und A₅₀ₘₘ wurden jeweils gemäß DIN EN ISO 6892-1 / A224 bestimmt.

**Tabelle 2**

| **Probe** | **Zustand** | **Dicke [mm]** | **R_{p0,2} [N/mm²]** | **Rₘ [N/mm²]** | **A_{g} [%]** | **A₅₀ₘₘ [%]** |
|---|---|---|---|---|---|---|
| A | vor Lötsimulation O-Temper | 1,5 | 52 | 127 | 19,9 | 26,0 |
| A | vor Lötsimulation H14 | 1,5 | 165 | 179 | 1,9 | 5,5 |
| B | vor Lötsimulation O-Temper | 1,5 | 52 | 128 | 20,2 | 26,4 |
| B | vor Lötsimulation H14 | 1,5 | 169 | 179 | 1,7 | 5,1 |
| C | vor Lötsimulation O-Temper | 1,5 | 68 | 152 | 17,8 | 22,4 |
| A | nach Lötsimulation O-Temper | 1,5 | 47 | 129 | 18,6 | 22,9 |
| A | nach Lötsimulation H14 | 1,5 | 46 | 130 | 19,0 | 23,1 |
| B | nach Lötsimulation O-Temper | 1,5 | 47 | 134 | 14,9 | 15,7 |
| B | nach Lötsimulation H14 | 1,5 | 47 | 138 | 18,2 | 21,3 |
| C | nach Lötsimulation O-Temper | 1,5 | 51 | 148 | 14,8 | 20,7 |
| D | vor Lötsimulation O-Temper | 1,0 | 52 | 125 | 21,3 | 31,6 |
| D | nach Lötsimulation O-Temper | 1,0 | 49 | 142 | 17,2 | 19,6 |
| E | vor Lötsimulation O-Temper | 1,5 | 52 | 121 | 22,5 | 33,8 |
| E | nach Lötsimulation O-Temper | 1,5 | 45 | 132 | 20,2 | 25,6 |
| F | vor Lötsimulation O-Temper | 1,6 | 49 | 121 | 22,4 | 33,5 |
| F | nach Lötsimulation O-Temper | 1,6 | 47 | 129 | N/A | N/A |

Die Ergebnisse in Tabelle 2 zeigen, dass mit der erfindungsgemäßen Legierung (Proben A und B sowie D bis F) vergleichbare Festigkeiten erreicht werden können wie mit Standardlegierungen (Probe C).

Weiterhin wurden an den Proben Korrosionstests durchgeführt. Hierzu wurde zunächst das elektrochemische Korrosionspotential nach ASTM G69 gegen eine gesättigte Calomel-Elektrode in einem Elektrolyten aus neutraler 1-molarer NaCl-Lösung gemessen. Das Korrosionspotential wurde jeweils an der Kernlage gemessen.

Die Ergebnisse der Messungen sind in der nachfolgenden Tabelle 3 wiedergegeben. Die Messung wurde jeweils vor und nach der oben beschriebenen Lötsimulation durchgeführt.

**Tabelle 3**

| **Probe** | **Temperzustand** | **Korrosionspotential vor Lötsimulation [mV]** | **Korrosionspotential nach Lötsimulation [mV]** |
|---|---|---|---|
| A | O | -773 | -759 |
| A | H14 | -772 | -759 |
| B | O | -772 | -758 |
| B | H14 | -770 | -761 |
| C | O | -746 | -727 |
| D | O | -759 | -742 |
| E | O | -784 | -757 |
| F | O | -760 | -747 |

Die Proben A und B sowie D bis F liefern vergleichbar gute Werte für das Korrosionspotential. Die vorgeschlagene Aluminiumlegierung mit dem geringeren Mg-Gehalt von max. 0,10 Gew.-% (entsprechend Proben A und D bis F) ist bevorzugt, da auf diese Weise eine Beeinträchtigung der Lötbarkeit im CAB-Lötprozess durch einen höheren Mg-Anteil verhindert werden kann. Ebenso wird ein Mg-Anteil von 0,04 Gew.-% oder mehr bevorzugt, um auf diese Weise die gewünschte Festigkeit und das gewünschte Korrosionspotential der Legierung besser einstellen zu können. Die Probe entsprechend der Vergleichslegierung C zeigt ein Korrosionspotential deutlich außerhalb des angestrebten Bereichs.

Ein Vorteil der für die Kernlegierung vorgeschlagenen Legierung liegt insbesondere in der galvanischen Kompatibilität mit typischen Legierungen für Tauscherröhrchen, insbesondere MPEs. Zur Überprüfung dieser galvanischen Kompatibilität wurden Kontaktkorrosionsmessungen nach DIN 50919 durchgeführt. Für diese Messungen wurden die Proben A, B und C jeweils in einem Elektrolyten in Kontakt mit Proben K aus einem stranggepressten Röhrchen der häufig verwendeten Legierung EN-AW 3102 gebracht. Als Elektrolyt wurde eine angesäuerte synthetische Meerwasserlösung mit einem pH-Wert zwischen 2,8 und 3,0 gemäß Prüfnorm ASTM G85, Annex A3 verwendet. Vor der Messung wurden die Proben A, B, C und K jeweils der oben beschriebenen Lötsimulation unterzogen. Die Proben K aus EN-AW 3102 weisen im lötsimulierten Zustand ein Korrosionspotential nach ASTM G69 von -742mV auf.

Die Kontaktkorrosionsmessung nach DIN 50919 erfolgte bei den Probe A, B und C auf der unplattierten Seite, d.h. direkt an der Kernlage. Die galvanische Kompatibilität wurde jeweils anhand der Richtung des gemessenen Stromflusses beurteilt. Eine Kompatibilität ist dann gegeben, wenn der Stromfluss von der Probe für die Komponente des Wärmetauschers, z.B. des Rohrbodens oder des Sammlerrohrs, hin zum Werkstoff des Tauscherröhrchens, insbesondere des MPEs erfolgt. In diesem Fall löst sich die Komponente (Rohrboden/Sammlerrohr) bevorzugt auf und opfert sich für das Tauscherröhrchen (MPE).

Bei den Kontaktkorrosionsmessungen ergab die Kombination der Probe A (O-Temper) mit einer Probe K einen Massenverlust an der Probe K von 1,6 g/m² und die Kombination der Probe B (O-Temper) mit einer Probe K einen Massenverlust an der Probe K von 3,9 g/m². Demgegenüber betrug der Massenverlust an der Probe K bei Kombination der Probe C (O-Temper) mit einer Probe K 34,4 g/m². Die Proben A und B wiesen demnach eine erheblich bessere galvanische Kompatibilität zur Probe K auf als die Vergleichsprobe C, d.h. die Korrosion der Probe K wurde durch die Kombination mit einer der Proben A oder B erheblich reduziert.

Zusammengefasst zeigen die zuvor beschriebenen Versuche, dass durch die Verwendung der Legierung, die vorliegend für die Kernlagen von an Tauscherröhrchen angeschlossenen Komponenten vorgeschlagen wird, ein anodischer Schutz der Tauscherröhrchen erreicht werden kann, so dass die Lebensdauer des Wärmetauschers deutlich verlängert wird. Weiterhin weisen die entsprechenden Komponenten auch eine ausreichende Festigkeit auf.

## Patentansprüche

1. Wärmetauscher (10), insbesondere für Kraftfahrzeuge,
- mit mindestens einem Tauscherröhrchen (12) aus einer Aluminiumlegierung und mit mindestens einer in Fluidverbindung an dem Tauscherröhrchen (12) angeschlossenen Komponente (14,16),
- wobei das Tauscherröhrchen (12) und die Komponente (14,16) über eine gemeinsame Lötverbindung miteinander verbunden sind,
**dadurch gekennzeichnet,**
- **dass** die an dem Tauscherröhrchen (12) angeschlossene Komponente (14,16) eine Kernlage (24) aus einer Aluminiumlegierung mit folgender Zusammensetzung aufweist:
| | |
|---|---|
| Si: | 0,50 - 0,7 Gew.-%, |
| Fe: | 0,15 - 0,40 Gew.-%, |
| Cu: | max. 0,10 Gew.-%, vorzugsweise max. 0,05 Gew.-%, |
| Mn: | 0,9 - 1,5 Gew.-%, vorzugsweise 1,2 - 1,5 Gew.-%, |
| Mg: | max. 0,30 Gew.-%, vorzugsweise 0,01 - 0,10 Gew.-%, |
| Cr: | max. 0,25 Gew.-%, vorzugsweise 0,10 - 0,20 Gew.-%, |
| Zn: | max. 0,50 Gew.-%, vorzugsweise max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |
unvermeidbare Verunreinigungen einzeln max. 0,05 Gew.-%, insgesamt max. 0,15 Gew.-%, Rest Aluminium.

2. Wärmetauscher nach Anspruch 1,
**dadurch gekennzeichnet,**
**dass** die Aluminiumlegierung der Kernlage (24) folgende Zusammensetzung aufweist:
| | |
|---|---|
| Si: | 0,50 - 0,7 Gew.-%, |
| Fe: | 0,15 - 0,40 Gew.-%, |
| Cu: | max. 0,03 Gew.-%, |
| Mn: | 1,2 - 1,5 Gew.-%, |
| Mg: | 0,01 - 0,10 Gew.-%, |
| Cr: | 0,10 - 0,20 Gew.-%, |
| Zn: | max. 0,10 Gew.-%, |
| Ti: | max. 0,25 Gew.-%, |
| Zr: | max. 0,25 Gew.-%, |
unvermeidbare Verunreinigungen einzeln max. 0,05 Gew.-%, insgesamt max. 0,15 Gew.-%, Rest Aluminium.

3. Wärmetauscher nach Anspruch 1 oder 2,
**dadurch gekennzeichnet,**
**dass** die Aluminiumlegierung der Kernlage (24) ein Verhältnis des Mn-Gehalts zum Si-Gehalt im Bereich von 1,7 bis 3, vorzugsweise von 2 bis 3, insbesondere von 2 bis 2,5 aufweist.

4. Wärmetauscher nach einem der Ansprüche 1 bis 3,
**dadurch gekennzeichnet,**
**dass** die an dem Tauscherröhrchen (12) angeschlossene Komponente ein Sammlerrohr (14,16) oder ein Rohrboden ist.

5. Wärmetauscher nach einem der Ansprüche 1 bis 4,
**dadurch gekennzeichnet,**
**dass** die an dem Tauscherröhrchen (12) angeschlossene Komponente (14,16) ein Korrosionspotential nach ASTM G69 von -740 mV oder unedler aufweist.

6. Wärmetauscher nach einem der Ansprüche 1 bis 5,
**dadurch gekennzeichnet,**
**dass** das Tauscherröhrchen (12) ein stranggepresstes Mehrkammerröhrchen ist.

7. Wärmetauscher nach einem der Ansprüche 1 bis 6,
**dadurch gekennzeichnet,**
**dass** das Tauscherröhrchen (12) aus einer Aluminiumlegierung vom Typ 3xxx besteht.

8. Wärmetauscher nach einem der Ansprüche 1 bis 7,
**dadurch gekennzeichnet,**
**dass** die gemeinsame Lötverbindung des Tauscherröhrchens (12) und der daran angeschlossenen Komponente (14, 16) unter Verwendung eines Lots erzeugt wurde, das einen Zn-Gehalt von maximal 0,50 Gew.-%, vorzugsweise von maximal 0,20 Gew.-%,, aufweist.

9. Wärmetauscher nach einem der Ansprüche 1 bis 8,
**dadurch gekennzeichnet,**
**dass** die an dem Tauscherröhrchen (12) angeschlossene Komponente (14,16) eine aufplattierte Lotschicht (26) aus einer Lotlegierung aufweist, wobei die Lotlegierung eine Aluminiumlegierung mit einem Si-Gehalt von 7 bis 12 Gew.-% und mit einem Zn-Gehalt von max. 0,50 Gew.-%, vorzugsweise von max. 0,20 Gew.-%, ist

10. Verwendung einer Aluminiumlegierung oder eines Aluminiumbands mit einer Kernlage (24) aus dieser Aluminiumlegierung zur Herstellung einer Komponente, insbesondere eines Sammlerrohrs (14, 16) oder eines Rohrbodens, für einen Wärmetauscher, insbesondere eines Wärmetauschers nach einem der Ansprüche 1 bis 9, wobei die Komponente dazu eingerichtet ist, in einer Fluidverbindung an einem Tauscherröhrchen des Wärmetauschers angeschlossen zu werden, wobei die Aluminiumlegierung folgende Zusammensetzung aufweist:
| | |
|---|---|
| Si: | 0,50 - 0,7 Gew.-%, |
| Fe: | 0,15 - 0,40 Gew.-%, |
| Cu: | max. 0,10 Gew.-%, vorzugsweise max. 0,05 Gew.-%, |
| Mn: | 0,9 - 1,5 Gew.-%, vorzugsweise 1,2 - 1,5 Gew.-%, |
| Mg: | max. 0,30 Gew.-%, vorzugsweise 0,01 - 0,10 Gew.-%, |
| Cr: | max. 0,25 Gew.-%, vorzugsweise 0,10 - 0,20 Gew.-%, |
| Zn: | max. 0,50 Gew.-%, vorzugsweise max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |
unvermeidbare Verunreinigungen einzeln max. 0,05 Gew.-%, insgesamt max. 0,15 Gew.-%, Rest Aluminium.

11. Verwendung nach Anspruch 10,
wobei das Aluminiumband eine auf die Kernlage (24) aufplattierte Lotschicht (26) aus einer Lotlegierung aufweist und wobei die Lotlegierung eine Aluminiumlegierung mit einem Si-Gehalt von 7 bis 12 Gew.-% und mit einem Zn-Gehalt von max. 0,50 Gew.-%, vorzugsweise von max. 0,20 Gew.-%, ist.

12. Verfahren zur Herstellung eines Aluminiumbands zur Verwendung nach einem der Ansprüche 10 oder 11 mit folgenden Schritten:
- Gießen eines Walzbarrens im DC-Verfahren aus einer Aluminiumlegierung mit der folgenden Zusammensetzung:
| | |
|---|---|
| Si: | 0,50 - 0,7 Gew.-%, |
| Fe: | 0,15 - 0,40 Gew.-%, |
| Cu: | max. 0,10 Gew.-%, vorzugsweise max. 0,05 Gew.-%, |
| Mn: | 0,9 - 1,5 Gew.-%, vorzugsweise 1,2 - 1,5 Gew.-%, |
| Mg: | max. 0,30 Gew.-%, vorzugsweise 0,01 - 0,10 Gew.-%, |
| Cr: | max. 0,25 Gew.-%, vorzugsweise 0,10 - 0,20 Gew.-%, |
| Zn: | max. 0,50 Gew.-%, vorzugsweise max. 0,10 Gew.-%, |
| Ti: | max. 0,25 Gew.-%, vorzugsweise max. 0,05 Gew.-%, |
| Zr: | max. 0,25 Gew.-%, vorzugsweise max. 0,05 Gew.-%, |
unvermeidbare Verunreinigungen einzeln max. 0,05 Gew.-%, insgesamt max. 0,15 Gew.-%, Rest Aluminium,
- Homogenisieren des Walzbarrens mittels einer Glühbehandlung bei einer Temperatur im Bereich von 540 °C und 620 °C und einer Haltezeit bei der Zieltemperatur zwischen 4 und 12 Stunden,
- Warmwalzen des Walzbarrens zu einem Warmband, insbesondere auf eine Warmbanddicke im Bereich von 2,0 bis 10 mm,
- Kaltwalzen des Warmbands auf Enddicke mit optionaler Zwischenglühung bei einer Temperatur im Bereich von 300 °C bis 450 °C, wobei die Enddicke des Kaltbands vorzugsweise im Bereich von 0,1 bis 5 mm, insbesondere im Bereich von 1,0 bis 2,5 mm, liegt.

13. Verfahren nach Anspruch 12 zur Herstellung eines walzplattierten Aluminiumbands,
- bei dem der Walzbarren vor dem Warmwalzen mit einer Plattierauflage versehen wird.

14. Verfahren nach Anspruch 12 oder 13,
**dadurch gekennzeichnet,**
**dass** die Plattierauflage aus einer Lotlegierung besteht, wobei die Lotlegierung eine Aluminiumlegierung mit einem Si-Gehalt von 7 bis 12 Gew.-% und mit einem Zn-Gehalt von max. 0,50 Gew.-%, insbesondere von max. 0,20 Gew.-% ist.

15. Verfahren nach einem der Ansprüche 12 bis 14,
**dadurch gekennzeichnet,**
**dass** das plattierte Kaltband an Enddicke bei einer Temperatur im Bereich von 300 °C und 450 °C weichgeglüht oder bei einer Temperatur im Bereich von 240 °C und 350 °C schlussgeglüht wird.

## Claims

1. Heat exchanger (10), in particular for motor vehicles,
- with at least one exchanger tube (12) made of an aluminium alloy and with at least one component (14, 16) connected in fluid communication to the exchanger tube (12),
- wherein the exchanger tube (12) and the component (14,16) are connected to one another by way of a common brazed connection,
**characterised in,**
- **that** the component (14, 16) connected to the exchanger tube (12) has a core layer (24) of an aluminium alloy with the following composition:
| | |
|---|---|
| Si: | 0.50 - 0.7% by weight, |
| Fe: | 0.15 - 0.40% by weight, |
| Cu: | max. 0.10% by weight, preferably max. 0.05% by weight, |
| Mn: | 0.9 - 1.5% by weight, preferably 1.2 to 1.5% by weight, |
| Mg: | max. 0.30% by weight, preferably 0.01 - 0.10% by weight, |
| Cr: | max. 0.25% by weight, preferably 0.10 to 0.20% by weight, |
| Zn: | max. 0.50% by weight, preferably max. 0.10% by weight, |
| Ti: | max. 0.25% by weight, preferably max. 0.05% by weight, |
| Zr: | max. 0.25% by weight, preferably max. 0.05% by weight, |
unavoidable impurities individually max. 0.05% by weight, in total max. 0.15% by weight, remainder aluminium.

2. Heat exchanger according to Claim 1,
**characterised in that** the aluminium alloy of the core layer (24) has the following composition:
| | |
|---|---|
| Si: | 0.50 - 0.7% by weight, |
| Fe: | 0.15 - 0.40% by weight, |
| Cu: | max. 0.03% by weight, |
| Mn: | 1.2 - 1.5% by weight, |
| Mg: | 0.01 - 0.10% by weight, |
| Cr: | 0.10 - 0.20% by weight, |
| Zn: | max. 0.10% by weight, |
| Ti: | max. 0.25% by weight, |
| Zr: | max. 0.25% by weight, |
unavoidable impurities individually max. 0.05% by weight, in total max. 0.15% by weight, remainder aluminium.

3. Heat exchanger according to Claim 1 or 2,
**characterised in that** the aluminium alloy of the core layer (24) has a ratio of the Mn content to the Si content in the range of 1.7 to 3, preferably of 2 to 3, in particular of 2 to 2.5.

4. Heat exchanger according to any one of Claims 1 to 3,
**characterised in that** the component connected to the exchanger tube (12) is a manifold (14,16) or a tubesheet.

5. Heat exchanger according to any one of Claims 1 to 4,
**characterised in that** the component (14,16) connected to the exchanger tube (12) has a corrosion potential in accordance with ASTM G69 of -740 mV or baser.

6. Heat exchanger according to any one of Claims 1 to 5,
**characterised in that** the exchanger tube (12) is an extruded multi-chamber tube.

7. Heat exchanger according to any one of Claims 1 to 6,
**characterised in that** the exchanger tube (12) consists of an aluminium alloy of the type 3xxx.

8. Heat exchanger according to any one of Claims 1 to 7,
**characterised in that** the common brazed connection of the exchanger tube (12) and the component (14,16) connected thereto was produced using a brazing material which has a Zn content of max. 0.50% by weight, preferably of max. 0.20% by weight.

9. Heat exchanger according to any one of Claims 1 to 8,
**characterised in that** the component (14, 16) connected to the exchanger tube (12) has a clad brazing material layer (26) of a brazing alloy, wherein the brazing alloy is an aluminium alloy with a Si content of 7 to 12% by weight and with a Zn content of max. 0.50% by weight, preferably of max. 0.20% by weight.

10. Use of an aluminium alloy or an aluminium strip with a core layer (24) of this aluminium alloy for the production of a component, in particular a manifold (14,16) or a tubesheet for a heat exchanger, in particular a heat exchanger according to any one of Claims 1 to 9, wherein the component is designed to be connected in fluid communication to an exchanger tube of the heat exchanger, wherein the aluminium alloy has the following composition:
| | |
|---|---|
| Si: | 0.50 - 0.7% by weight, |
| Fe: | 0.15 - 0.40% by weight, |
| Cu: | max. 0.10% by weight, preferably max. 0.05% by weight, |
| Mn: | 0.9 - 1.5% by weight, preferably 1.2 - 1.5% by weight, |
| Mg: | max. 0.30% by weight, preferably 0.01 - 0.10% by weight, |
| Cr: | max. 0.25% by weight, preferably 0.10 - 0.20% by weight, |
| Zn: | max. 0.50% by weight, preferably max. 0.10% by weight, |
| Ti: | max. 0.25% by weight, preferably max. 0.05% by weight, |
| Zr: | max. 0.25% by weight, preferably max. 0.05% by weight, |
unavoidable impurities individually max. 0.05% by weight, in total max. 0.15% by weight, remainder aluminium.

11. Use according to Claim 10,
wherein the aluminium strip has a brazing material layer (26), clad onto the core layer (24), of a brazing alloy and wherein the brazing alloy is an aluminium alloy with an Si content of 7 to 12% by weight and with a Zn content of max. 0.50% by weight, preferably of max. 0.20% by weight.

12. Method for the production of an aluminium strip for the use according to any one of Claims 10 or 11 with the following steps:
- casting a rolling ingot in the DC method from an aluminium alloy with the following composition:
| | |
|---|---|
| Si: | 0.50 - 0.7% by weight, |
| Fe: | 0.15 - 0.40% by weight, |
| Cu: | max. 0.10% by weight, preferably max. 0.05% by weight, |
| Mn: | 0.9 - 1.5% by weight, preferably 1.2 - 1.5% by weight, |
| Mg: | max. 0.30% by weight, preferably 0.01 - 0.10% by weight, |
| Cr: | max. 0.25% by weight, preferably 0.10 - 0.20% by weight, |
| Zn: | max. 0.50% by weight, preferably max. 0.10% by weight, |
| Ti: | max. 0.25% by weight, preferably max. 0.05% by weight, |
| Zr: | max. 0.25% by weight, preferably max. 0.05% by weight, |
unavoidable impurities individually max. 0.05% by weight, in total max. 0.15% by weight, remainder aluminium,
- homogenising the rolling ingot by means of an annealing treatment at a temperature in the range of 540°C and 620°C and a hold time at the target temperature between 4 and 12 hours,
- hot rolling the rolling ingot to form a hot strip, in particular to a hot strip thickness in the range of 2.0 to 10 mm,
- cold rolling the hot strip to a final thickness with optional intermediate annealing at a temperature in the range of 300°C to 450°C, wherein the final thickness of the cold strip is preferably in the range of 0.1 to 5 mm, in particular in the range of 1.0 to 2.5 mm.

13. Method according to Claim 12 for the production of a roll-clad aluminium strip,
- in which the rolling ingot is provided with a cladding coat prior to hot rolling.

14. Method according to Claim 12 or 13,
**characterised in that** the cladding coat consists of a brazing alloy, wherein the brazing alloy is an aluminium alloy with a Si content of 7 to 12% by weight and with a Zn content of max. 0.50% by weight, in particular of max. 0.20% by weight.

15. Method according to any one of Claims 12 to 14,
**characterised in that** the clad cold strip is soft-annealed at final thickness at a temperature in the range of 300°C and 450°C or finally annealed at a temperature in the range of 240°C and 350°C.

## Revendications

1. Échangeur de chaleur (10), en particulier pour véhicules automobiles, comprenant
- au moins un tube (12) d'échangeur en alliage d'aluminium et au moins un élément (14, 16) raccordé en liaison fluidique au tube (12) de l'échangeur,
- où le tube (12) de l'échangeur et l'élément (14,16) sont reliés ensemble par une liaison brasée commune,
**caractérisé en ce que**
- l'élément (14,16) raccordé au tube (12) de l'échangeur comprend une couche centrale (24) faite d'un alliage d'aluminium présentant la composition suivante :
Si : 0,50 - 0,7 % en poids,
Fe : 0,15 - 0,40 % en poids,
Cu : max. 0,10 % en poids, de préférence max. 0,05 % en poids,
Mn : 0,9 -1,5 % en poids, de préférence 1,2 - 1,5 % en poids,
Mg : max. 0,30 % en poids, de préférence 0,01 - 0,10 % en poids,
Cr : max. 0,25 % en poids, de préférence 0,10 - 0,20 % en poids,
Zn : max. 0,50 % en poids, de préférence max. 0,10 % en poids,
Ti : max. 0,25 % en poids, de préférence max. 0,05 % en poids,
Zr : max. 0,25 % en poids, de préférence max. 0,05 % en poids,
des impuretés inévitables individuellement max. 0,05 % en poids, au total max. 0,15 % en poids, le reste étant de l'aluminium.

2. Échangeur de chaleur selon la revendication 1, **caractérisé en ce que** l'alliage d'aluminium de la couche centrale (24) présente la composition suivante :
Si : 0,50 - 0,7 % en poids,
Fe : 0,15 - 0,40 % en poids,
Cu : max. 0,03 % en poids,
Mn : 1,2 - 1,5 % en poids,
Mg : 0,01 - 0,10 % en poids,
Cr : 0,10 - 0,20 % en poids,
Zn : max. 0,10 % en poids,
Ti : max. 0,25 % en poids,
Zr : max. 0,25 % en poids,
des impuretés inévitables individuellement max. 0,05 % en poids, au total max. 0,15 % en poids, le reste étant de l'aluminium.

3. Échangeur de chaleur selon la revendication 1 ou 2, **caractérisé en ce que** l'alliage d'aluminium de la couche centrale (24) présente un rapport de la teneur en Mn à la teneur en Si de l'ordre de 1,7 à 3, de préférence de 2 à 3, en particulier de 2 à 2,5.

4. Échangeur de chaleur selon l'une des revendications 1 à 3, **caractérisé en ce que** l'élément (14,16) raccordé au tube (12) de l'échangeur est un tube collecteur (14, 16) ou un fond de tube.

5. Échangeur de chaleur selon l'une des revendications 1 à 4, **caractérisé en ce que** l'élément (14, 16) raccordé au tube (12) de l'échangeur présente un potentiel de corrosion selon ASTM G69 de -740 mV ou plus bas.

6. Échangeur de chaleur selon l'une des revendications 1 à 5, **caractérisé en ce que** le tube (12) de l'échangeur est un tube extrudé à chambres multiples.

7. Échangeur de chaleur selon l'une des revendications 1 à 6, **caractérisé en ce que** le tube (12) de l'échangeur se compose d'un alliage d'aluminium de type 3xxx.

8. Échangeur de chaleur selon l'une des revendications 1 à 7, **caractérisé en ce que** la liaison brasée commune du tube (12) de l'échangeur et de l'élément y étant raccordé (14, 16) a été produite en utilisant une brasure qui présente une teneur en Zn d'au maximum 0,50 % en poids, de préférence d'au maximum 0,20 % en poids.

9. Échangeur de chaleur selon l'une des revendications 1 à 8, **caractérisé en ce que** l'élément (14, 16) raccordé au tube (12) de l'échangeur présente une couche de brasage plaquée (26) à base d'un alliage de brasage, où l'alliage de brasage est un alliage d'aluminium avec une teneur en Si de 7 à 12 % en poids et une teneur en Zn d'au max. 0,50 % en poids, de préférence d'au max. 0,20 % en poids.

10. Utilisation d'un alliage d'aluminium ou d'une bande d'aluminium comprenant une couche centrale (24) faite de cet alliage d'aluminium pour fabriquer un élément, en particulier un tube collecteur (14, 16) ou un fond de tube pour un échangeur de chaleur, en particulier un échangeur de chaleur selon l'une des revendications 1 à 9, où l'élément est agencé de sorte à être raccordé en liaison fluidique au tube de l'échangeur de chaleur, où l'alliage d'aluminium présente la composition suivante :
Si : 0,50 - 0,7 % en poids,
Fe : 0,15 - 0,40 % en poids,
Cu : max. 0,10 % en poids, de préférence max. 0,05 % en poids,
Mn : 0,9 - 1,5 % en poids, de préférence e 1,2 - 1,5 % en poids,
Mg : max. 0,30 % en poids, de préférence 0,01 - 0,10 % en poids,
Cr : max. 0,25 % en poids, de préférence 0,10 - 0,20 % en poids,
Zn : max. 0,50 % en poids, de préférence max. 0,10 % en poids,
Ti : max. 0,25 % en poids, de préférence max. 0,05 % en poids,
Zr : max. 0,25 % en poids, de préférence max. 0,05 % en poids,
des impuretés inévitables individuellement max. 0,05 % en poids, au total max. 0,15 % en poids, le reste étant de l'aluminium.

11. Utilisation selon la revendication 10, où la bande d'aluminium présente une couche de brasage (26) plaquée sur la couche centrale (24) à base d'un alliage de brasage et où l'alliage de brasage est un alliage d'aluminium avec une teneur en Si de 7 à 12 % en poids et une teneur en Zn de max. 0,50 % en poids, de préférence de max. 0,20 % en poids.

12. Procédé de fabrication d'une bande d'aluminium pour une utilisation selon l'une des revendications 10 ou 11, comportant les étapes suivantes :
- Coulée d'une billette de laminage par un procédé à refroidissement direct à base d'un alliage d'aluminium avec la composition suivante :
Si : 0,50 - 0,7 Gew.-%,
Fe : 0,15 - 0,40 Gew.-%,
Cu : max. 0,10 Gew.-%, de préférence max. 0,05 Gew.-%,
Mn : 0,9 -1,5 Gew.-%, de préférence 1,2 - 1,5 Gew.-%,
Mg : max. 0,30 Gew.-%, de préférence 0,01 - 0,10 Gew.-%,
Cr : max. 0,25 Gew.-%, de préférence 0,10 - 0,20 Gew.-%,
Zn : max. 0,50 Gew.-%, de préférence max. 0,10 Gew.-%,
Ti : max. 0,25 Gew.-%, de préférence max. 0,05 Gew.-%,
Zr : max. 0,25 Gew.-%, de préférence max. 0,05 Gew.-%,
des impuretés inévitables individuellement max. 0,05 % en poids, au total max. 0,15 % en poids, le reste étant de l'aluminium,
- Homogénéisation de la billette de laminage à l'aide d'un traitement au recuit à une température dans une gamme allant de 540 °C à 620 °C et par un temps d'arrêt à la température cible entre 4 et 12 heures.
- Laminage à chaud de la billette de laminage pour créer une bande à chaud, en particulier d'une épaisseur de bande à chaud de l'ordre de 2,0 à 10 mm,
- Laminage à froid de la bande à chaud pour atteindre une épaisseur finale avec un recuit intermédiaire facultatif à une température dans une gamme allant de 300 °C à 450 °C, où l'épaisseur finale de la bande à froid se situe de préférence dans une gamme allant de 0,1 à 5 mm, en particulier dans une gamme allant de 1,0 à 2,5 mm.

13. Procédé selon la revendication 12 pour la fabrication d'une bande d'aluminium plaquée par laminage, lors duquel la billette de laminage est pourvue, avant le laminage à chaud, d'un revêtement de placage.

14. Procédé selon la revendication 12 ou 13, **caractérisé en ce que** le revêtement de placage se compose d'un alliage de brasage, où l'alliage de brasage est un alliage d'aluminium avec une teneur en Si de 7 à 12 % en poids et une teneur en Zn d'au maximum 0,50 % en poids, en particulier d'au max. 0,20 % en poids.

15. Procédé selon l'une des revendications 12 à 14, **caractérisé en ce que** la bande à froid plaquée est recuite sur une épaisseur finale à une température dans une gamme allant de 300 °C à 450 °C ou est soumise à un recuit final à une température dans une gamme allant de 240 °C à 350 °C.
